# EUROPÄISCHE PATENTSCHRIFT

(11) **EP 3 659 690 B1**
(45) Veröffentlichungstag und Bekanntmachung des Hinweises auf die Patenterteilung: **23.06.2021**
(21) Anmeldenummer: 19210559.1
(22) Anmeldetag: 21.11.2019
(51) Int. Cl.: B01D 33/06, B01D 33/21, B01D 33/067

(54) **FILTRATIONSVORRICHTUNG**
FILTRATION DEVICE
DISPOSITIF DE FILTRATION

(30) Priorität: 28.11.2018 DE 102018130204
(43) Veröffentlichungstag der Anmeldung: 03.06.2020
(73) Patentinhaber: Andritz KMPT GmbH, 85256 Vierkirchen (DE)
(72) Erfinder: SCHERER, Dieter, 85276 Pfaffenhofen (DE); KNOBLOCH, Wolfgang, 82327 Tutzing (DE)
(74) Vertreter: Viering, Jentschura & Partner mbB Patent- und Rechtsanwälte

(56) Entgegenhaltungen:
- DE-A1- 3 307 519
- JP-U- H0 724 405
- US-A- 4 961 849

## Beschreibung

Die Erfindung betrifft eine Filtrationsvorrichtung.

Derartige Filtrationsvorrichtungen werden in vielen Anwendungen der Chemie und der Aufbereitung von zum Beispiel Rohstoffen und auch zum Beispiel in der Lebensmittelindustrie eingesetzt. Hierbei werden die Filtrationsvorrichtungen beispielsweise zum Ausfiltern eines Feststoffs von einer Flüssigkeit-Feststoff-Suspension eingesetzt. Beispiele solcher Filtrationsvorrichtungen sind u.a. Vakuum- und/oder Druck-Filtrationsvorrichtungen, Filterzentrifuge-Filtrationsvorrichtungen und Scheibenfilter-Filtrationsvorrichtungen, etc., die z.B. jeweilig Filtertücher (als Filtermittel) einsetzen, an welchem beim Filtervorgang der auszufilternde Feststoff unter Durchlassen der Flüssigkeit anhaftet. Zum Beispiel ist die Filtertrommel einer Vakuum- und/oder Druck-Filtrationsvorrichtung an ihrer Außenseite mit einem solchen Filtertuch versehen. Das genannte Filtertuch wird hierbei zum Beispiel mittels filtertrommelseitiger Profilleisten (z.B. mit einem Schwalbenschwanzprofil oder z.B. mit einem Omega-Profil) an der Filtertrommel befestigt. Solche Vakuum- und/oder Druck-Filtrationsvorrichtungen sind beispielsweise aus der DE 10 2016 111 842 A1 bekannt. Aus der JP H07 24405 U geht eine Filterzentrifuge mit einem Filtertuch hervor, welches mittels Magnetkräften an der inneren Stützwand des Filterkorbs befestigt ist. Permanentmagnete sind in die Oberfläche des Stützkörpers eingebettet und ferromagnetische Gegenstücke am Filtertuch befestigt.

Die Aufgabe der vorliegenden Erfindung ist eine Filtrationsvorrichtung bereitzustellen, welche ein einfaches, schnelles und sicheres Anbringen und Fixieren des Filtertuchs an der Filtrationsvorrichtung ermöglicht.

Die vorstehende Aufgabe wird gemäß den Merkmalen der unabhängigen Ansprüche gelöst. Die abhängigen Ansprüche beziehen sich auf vorteilhafte Ausführungen der Erfindung.

Hierzu stellt die Erfindung eine Filtrationsvorrichtung bereit, mit einem Filtertuch (z.B. einem Filtergewebetuch z.B. in Form von einem Kunststoff- und/oder einem Metallgewebe), einem Filtertuch-Stützkörper, welcher um eine Stützkörper-Drehachse herum drehbar gelagert ist und welcher eine Filtertuch-Anbringfläche aufweist, auf welcher das Filtertuch anbringbar ist, und einer Befestigungseinrichtung, mittels deren das Filtertuch an der Filtertuch-Anbringfläche lösbar befestigbar ist, wobei die Befestigungseinrichtung eine Magnetbefestigungseinrichtung aufweist, mittels deren das Filtertuch via magnetische Kraft an der Filtertuch-Anbringfläche befestigbar ist.

Hierbei kann das besagte Filtertuch einstückig (z.B. aus einem Stück) sein. Das Filtertuch kann aber auch aus einer Mehrzahl von (voneinander) separaten Filtertuchteilen gebildet sein, die zusammen genommen das Filtertuch bilden und die z.B. jeweilig benachbart zueinander angeordnet sein können, so dass z.B. diese Mehrzahl von separaten Filtertuchteilen eine im Wesentlichen geschlossene Filtertuchfläche bilden.

Die Magnetbefestigungseinrichtung erlaubt es in einfacher und schneller Weise, das Filtertuch auf bzw. an dem Filtertuch-Stützkörper zu montieren und zu demontieren, wobei das Filtertuch während des Betriebs der Filtrationsvorrichtung via magnetische Kraft fest und sicher an dem Filtertuch-Stützkörper gehalten werden kann.

Die Magnetbefestigungseinrichtung kann aufweisen: ein oder mehrere magnetische Elemente, welche/s an dem Filtertuch-Stützkörper angeordnet sind/ist und/oder welche/s von dem Filtertuch-Stützkörper ausgebildet sind/ist, und ein oder mehrere magnetische oder magnetisierbare Gegenelemente, welche/s an dem Filtertuch angeordnet sind/ist und/oder welche/s von dem Filtertuch ausgebildet sind/ist, wobei die magnetische Kraft zwischen dem/den magnetischen Element/en und dem/den magnetischen oder magnetisierbaren Gegenelement/en wirkt. Die Anordnung der magnetischen Elemente an dem Filtertuch-Stützkörper kann Kosten-Vorteile haben, weil das Filtertuch eventuell öfter auszutauschen ist (aus z.B. Verschleiß-Gründen), wobei die magnetischen oder magnetisierbaren Gegenelemente gegebenenfalls günstiger bereitzustellen sind als die magnetischen Elemente. Das oder die (jeweiligen) magnetischen Elemente können aber auch an dem Filtertuch angeordnet sein, und das oder die (jeweiligen) magnetischen oder magnetisierbaren Gegenelemente können an dem Filtertuch-Stützkörper angeordnet sein und/oder von dem Filtertuch-Stützkörper ausgebildet sein.

Das jeweilige magnetische Element (oder z.B. zumindest ein Teil (z.B. Teilanzahl) der magnetischen Elemente) kann von einem (jeweiligen) Permanentmagnet oder einem (jeweiligen) Elektromagnet gebildet sein, und/oder das jeweilige magnetische oder magnetisierbare Gegenelement (oder z.B. zumindest ein Teil (z.B. Teilanzahl) der magnetischen oder magnetisierbaren Gegenelemente) kann aus einem ferromagnetischen und/oder einem Duplex-Material (z.B. X2CrNiMoN 22-5-3 (Werkstoffnummer: 1.4462)) hergestellt sein.

Im Falle, dass das jeweilige magnetische Element (bzw. dass ein Teil der magnetischen Elemente) von einem (jeweiligen) Elektromagnet gebildet ist, kann die Filtrationsvorrichtung ferner bereitgestellt sein mit einer Elektromagnet-Steuerungsvorrichtung, die mit den jeweiligen Elektromagneten verbunden (z.B. elektrisch verbunden) ist und die konfiguriert ist, um die jeweiligen Elektromagnete zu steuern (bzw. die Stromversorgung der Elektromagnete zu steuern).

Der Filtertuch-Stützkörper kann im Bereich der Filtertuch-Anbringfläche zumindest teilweise aus einem magnetischen Material hergestellt sein, und das Filtertuch kann zumindest teilweise aus einem magnetischen Material, das zu dem magnetischen Material des Filtertuch-Stützkörpers im Bereich der Filtertuch-Anbringfläche gegenpolig ist, oder zumindest teilweise aus einem magnetisierbaren Material hergestellt sein, so dass das magnetische Element von dem Filtertuch-Stützkörper ausgebildet wird und dass das magnetische oder magnetisierbare Gegenelement von dem Filtertuch ausgebildet wird. Dies kann ferner den Vorteil haben, dass eine bzw. die magnetische Kraft zwischen dem Filtertuch-Stützkörper und dem Filtertuch wirken kann, so dass zusätzliche für die magnetische Kraft erforderliche Elemente nicht zwingend notwendig (aber nichtsdestotrotz zusätzlich möglich) sind, wodurch beispielsweise Herstellungskosten eingespart werden können und/oder eine Montage/eine Demontage weiter vereinfacht werden können.

Ferner kann zum Beispiel zumindest ein Teil (z.B. eine Teilanzahl) der magnetischen oder magnetisierbaren Gegenelemente jeweilig oder das jeweilige magnetische oder magnetisierbare Gegenelement als ein von dem Filtertuch separates Bauteil ausgebildet sein, das in das Filtertuch eingebracht ist und/oder an dem Filtertuch befestigt ist. Hierbei kann zum Beispiel zumindest ein Teil (z.B. eine Teilanzahl) der magnetischen oder magnetisierbaren Gegenelemente oder das jeweilige magnetische oder magnetisierbare Gegenelement in das Filtertuch laminiert sein und/oder in Taschen (z.B. in Aufnahmetaschen, z.B. in Einschubtaschen) aufgenommen sein, die in dem Filtertuch ausgebildet sind. Ferner kann hierbei zum Beispiel zumindest ein Teil (z.B. eine Teilanzahl) der magnetischen oder magnetisierbaren Gegenelemente oder das jeweilige magnetische oder magnetisierbare Gegenelement in oder an das Filtertuch ein- oder angenäht oder ein- oder angeklebt sein.

Ferner kann zum Beispiel zumindest ein Teil (z.B. eine Teilanzahl) der magnetischen oder magnetisierbaren Gegenelemente jeweilig oder das jeweilige magnetische oder magnetisierbare Gegenelement als ein zusammen mit dem Filtertuch integral hergestelltes Element ausgebildet sein. Hierbei kann/können zum Beispiel zumindest ein Teil (z.B. eine Teilanzahl) der magnetischen oder magnetisierbaren Gegenelemente oder das jeweilige magnetische oder magnetisierbare Gegenelement von magnetischen oder magnetisierbaren Fäden gebildet sein, aus welchen das Filtertuchmaterial zumindest teilweise gebildet (z.B. gewebt) ist.

Ferner kann zum Beispiel zumindest ein Teil (z.B. eine Teilanzahl) der magnetischen oder magnetisierbaren Gegenelemente jeweilig oder das jeweilige magnetische oder magnetisierbare Gegenelement als ein von dem Filtertuch separates (z.B. langgestrecktes) Klemmleistenbauteil (z.B. eine Klemmleiste) ausgebildet sein, mittels dessen das Filtertuch von einer Filtertuch-Außenseite her gegen die Filtertuch-Anbringfläche (via Magnetkraft) klemmbar ist, um das Filtertuch dadurch an der Filtertuch-Anbringfläche (via Magnetkraft) klemmend zu befestigen. Das jeweilige Klemmleistenbauteil kann auch wie oben für das als separates Bauteil beschriebene Gegenelement an/in dem Filtertuch angebracht sein (d.h. also z.B. in das Filtertuch laminiert sein und/oder in Taschen aufgenommen sein und/oder in oder an das Filtertuch ein- oder angenäht oder ein- oder angeklebt sein).

Ferner kann zum Beispiel zumindest ein Teil (z.B. eine Teilanzahl) der magnetischen oder magnetisierbaren Gegenelemente oder das jeweilige magnetische oder magnetisierbare Gegenelemente aus einem nicht-magnetischen, gegenüber einer zu filtrierenden Suspension korrosionsbeständigen Material sein.

Ferner kann zum Beispiel das jeweilige magnetische Element in dem Filtertuch-Stützkörper derart eingebettet sein, dass es nach außen hin gegen einen Berührungskontakt mit einer zu filtrierenden Suspension isoliert angeordnet ist. Dies kann beispielsweise den Vorteil haben, dass das jeweilige magnetische Element aus einem gegenüber der zu filtrierenden Suspension nicht korrosionsbeständigen Material gemacht sein kann.

Die Filtrationsvorrichtung ist ausgebildet als eine Vakuum- und/oder Druck-Filtrationsvorrichtung mit einer Filtertrommel, von welcher der Filtertuch-Stützkörper gebildet ist und welche eine Filtertrommellängsachse definiert, die mit der Stützkörper-Drehachse zusammenfällt, und welche eine Filtertrommelumfangswand aufweist, die sich rings um die Filtertrommellängsachse herum erstreckt und die eine Umfangswandaußenseite hat, von welcher die Filtertuch-Anbringfläche ausgebildet ist.

Die Vakuum- und/oder Druck-Filtrationsvorrichtung kann ferner bereitgestellt sein mit: einer mit der zuvor genannten Filtertrommel verbundenen Antriebswelle, die sich z.B. koaxial zur Filtertrommellängsachse erstreckt und mittels der die Filtertrommel drehantreibbar ist, und einer Antriebsvorrichtung (z.B. einem Antriebsmotor), die mit der Antriebswelle wirkverbunden ist, so dass ein von der Antriebsvorrichtung ausgehendes Drehmoment mittels der Antriebswelle auf die Filtertrommel übertragbar ist (z.B., in Betrieb, übertragen wird). Die Antriebswelle kann zum Beispiel mittels eines ersten und eines zweiten Lagers drehgelagert sein und kann zum Beispiel mittels einer mechanischen Kopplung (z.B. mittels Zahnräder, einer Kette und/oder eines Riemens) mit der Antriebsvorrichtung verbunden sein, so dass ein Drehmoment übertragbar ist.

Die Vakuum- und/oder Druck-Filtrationsvorrichtung kann ferner bereitgestellt sein mit einer Wanne, die konfiguriert ist, um die zu filternde Suspension aufzunehmen, wobei die Filtertrommel teilweise in die Wanne eingreift und innerhalb dieser Wanne rotierbar ist.

Die Filtertrommel weist eine Mehrzahl von Trennleisten auf, welche in Umfangsrichtung der Filtertrommel im Abstand voneinander angeordnet sind und welche sich an der Filtertrommelumfangswand entlang der Filtertrommellängsachse erstrecken, um dadurch in Umfangsrichtung der Filtertrommel eine korrespondierende Mehrzahl von Filterzellen zwischen sich zu begrenzen, wobei z.B. zumindest ein Teil (z.B. eine Teilanzahl) der magnetischen Elemente oder das jeweilige magnetische Element in der Mehrzahl von Trennleisten aufgenommen ist. Dies kann beispielsweise den Vorteil haben, dass das Filtertuch mittels der magnetischen Kraft gegen die Trennleisten gepresst wird, wodurch eine bessere Abdichtung zwischen den durch die Trennleisten abgegrenzten Filterzellen gegeben sein kann.

Die Filtertrommel kann eine Mehrzahl von Ringleisten aufweisen, welche in Längsrichtung der Filtertrommel im Abstand voneinander angeordnet sind und welche sich an der Filtertrommelumfangswand in Umfangsrichtung der Filtertrommel erstrecken, wobei z.B. ein Teil (z.B. eine Teilanzahl) der magnetischen Elemente in der Mehrzahl von Ringleisten aufgenommen ist.

Die Vakuum- und/oder Druck-Filtrationsvorrichtung kann ferner mit einer Drahtwicklung bereitgestellt sein, die sich an der Außenseite des an der Filtertrommel befestigten Filtertuchs rings um die Filtertrommellängsachse herum erstreckt, so dass sich das Filtertuch zwischen der Drahtwicklung und der Umfangswandaußenseite der Filtertrommel befindet. Dies kann beispielsweise den Vorteil haben, dass das Filtertuch zusätzlich zu der Befestigungseinrichtung mittels der Drahtwicklung an der Filtertrommel gehalten ist, so dass das Filtertuch trotz erhöhter externer Belastungen wie beispielsweise bei einem erhöhten Abblasedruck z.B. beim Filterkuchenabblasen sicher befestigt ist.

Eine radial (z.B. radial bezüglich der Filtertrommellängsachse) nach außen offene Trennleiste-Nut kann in der jeweiligen Trennleiste ausgebildet sein, und, im Befestigungszustand, in welchem das Filtertuch an der Umfangswandaußenseite befestigt ist, greift das Filtertuch in die Trennleiste-Nut ein und wird von dem magnetischen oder magnetisierbaren Gegenelement in diesem Eingriff mit der Trennleiste-Nut gehalten. Optional greift das magnetische oder magnetisierbare Gegenelement (in diesem Befestigungszustand) seinerseits zumindest teilweise in die Trennleiste-Nut ein. Hierdurch kann zum Beispiel das Filtertuch an der Filtertrommel zusätzlich gesichert sein/werden, und einer Verlagerung des Filtertuchs an der Filtertrommel kann dadurch beispielsweise besser entgegengewirkt sein, wodurch ein faltenfreier bzw. faltenarmer Montagezustand des Filtertuchs während des Betriebs der Vakuum- und/oder Druck-Filtrationsvorrichtung besser aufrechterhalten sein/werden kann. Dies wiederum kann während des Betriebs der Vakuum- und/oder Druck-Filtrationsvorrichtung zu einer Verringerung einer Feststoffablagerung an dem Filtertuch führen/beitragen.

In der jeweiligen Ringleiste kann eine radial (z.B. radial bezüglich der Filtertrommellängsachse) nach außen offene Ringleiste-Nut ausgebildet sein, und, im Befestigungszustand, in welchem das Filtertuch an der Umfangswandaußenseite befestigt ist, greift das Filtertuch in die Ringleiste-Nut ein und wird von dem magnetischen oder magnetisierbaren Gegenelement in diesem Eingriff mit der Ringleiste-Nut gehalten. Optional greift das magnetische oder magnetisierbare Gegenelement (im genannten Befestigungszustand) seinerseits zumindest teilweise in die Ringleiste-Nut ein. Hierdurch kann zum Beispiel das Filtertuch an der Filtertrommel zusätzlich gesichert sein/werden, und einer Verlagerung des Filtertuchs an der Filtertrommel kann dadurch beispielsweise besser entgegengewirkt sein, wodurch beispielsweise ein faltenfreier bzw. faltenarmer Montagezustand des Filtertuchs während des Betriebs der Vakuum- und/oder Druck-Filtrationsvorrichtung besser aufrechterhalten sein/werden kann. Dies wiederum kann während des Betriebs der Vakuum- und/oder Druck-Filtrationsvorrichtung zu einer Verringerung einer Feststoffablagerung an dem Filtertuch führen/beitragen.

In den zuvor beschriebenen Ausführungsbeispielen der Filtrationsvorrichtung, z.B. der Vakuum- und/oder Druck-Filtrationsvorrichtung, kann ein bzw. das Filtertuch an der Filtertuch-Anbringfläche, z.B. an der Filtertrommel (der Filtertrommelumfangswand), z.B. rein bzw. ausschließlich via magnetische Kraft an der Filtertuch-Anbringfläche, z.B. an der Filtertrommel, befestigbar bzw. befestigt sein (Rein-Magnetische-Befestigungsvariante). In diesem Fall ist die Befestigungseinrichtung (z.B. ausschließlich) als Magnetbefestigungseinrichtung ausgebildet. Jedoch kann das Filtertuch auch mittels einer Kombination konventioneller Befestigungsmittel und magnetischer Kraft an der Filtertuch-Anbringfläche, z.B. an der Filtertrommel, befestigbar bzw. befestigt sein (Hybrid-Befestigungsvariante). Die Befestigungseinrichtung kann daher ferner eine (magnetkraftfreie) Klemmbefestigungseinrichtung aufweisen, welche eine Mehrzahl von Eingriff-Stücken (z.B. eine Mehrzahl von Ringstäben, z.B. eine Mehrzahl von Ringkedern) aufweist, und die Filtertrommel kann z.B. eine Mehrzahl von Ringleisten aufweisen, welche in Längsrichtung der Filtertrommel im Abstand voneinander angeordnet sind und welche sich an der Filtertrommelumfangswand in Umfangsrichtung der Filtertrommel erstrecken, wobei in den jeweiligen Ringleisten eine radial (z.B. radial bezüglich der Filtertrommellängsachse) nach außen offene Halte-Nut umfänglich gebildet ist, wobei das Filtertuch jeweils in Umfangsrichtung der Filtertrommel darin festklemmbar ist mittels des jeweiligen Eingriff-Stücks (z.B. welches sich, im Festklemmzustand, in welchem das Filtertuch in der Halte-Nut klemmfixiert ist, in und entlang der Halte-Nut erstreckt).

Ferner ist hierin ein Beispiel einer Filtrationsvorrichtung offenbart, welche in einer Ausführungsform gemäß dem beanspruchten Gegenstand nicht enthalten ist, welche zum Beispiel ausgebildet sein kann entweder als eine Filterzentrifuge-Filtrationsvorrichtung mit einer Filtertrommel, von welcher der Filtertuch-Stützkörper gebildet ist und welche eine Filtertrommellängsachse definiert, die mit der Stützkörper-Drehachse zusammenfällt, und welche eine Filtertrommelumfangswand aufweist, die sich rings um die Filtertrommellängsachse herum erstreckt und die eine Umfangswandinnenseite hat, von welcher die Filtertuch-Anbringfläche ausgebildet ist, oder als eine Scheibenfilter-Filtrationsvorrichtung mit wenigstens einem Scheibenkörper (oder einer Mehrzahl von Scheibenkörpern), von welchem der Filtertuch-Stützkörper (jeweils) gebildet ist und welcher eine Scheibenkörper-Zentralachse definiert, die quer durch den wenigstens einen Scheibenkörper verläuft und die mit der Stützkörper-Drehachse zusammenfällt, und welcher zwei entgegengesetzte Scheibenkörperflächen hat, die quer zu der Scheibenkörper-Zentralachse verlaufen, wobei die Filtertuch-Anbringfläche von wenigstens einer der beiden Scheibenkörperflächen ausgebildet ist.

Die Filterzentrifuge-Filtrationsvorrichtung kann ferner bereitgestellt sein mit: einer mit der zuvor genannten Filtertrommel verbundenen Antriebswelle, die sich z.B. koaxial zur Filtertrommellängsachse erstreckt und mittels der die Filtertrommel drehantreibbar ist, und einer Antriebsvorrichtung (z.B. einem Antriebsmotor), die mit der Antriebswelle wirkverbunden ist, so dass ein von der Antriebsvorrichtung ausgehendes Drehmoment mittels der Antriebswelle auf die Filtertrommel übertragbar ist (z.B., in Betrieb, übertragen wird). Die Antriebswelle kann zum Beispiel mittels eines oder mehrerer Lager/s drehgelagert sein und kann zum Beispiel mittels einer mechanischen Kopplung (z.B. mittels Zahnräder, einer Kette und/oder eines Riemens) mit der Antriebsvorrichtung verbunden sein, so dass ein Drehmoment übertragbar ist.

Die Filterzentrifuge-Filtrationsvorrichtung kann ferner bereitgestellt sein mit einem Zentrifugengehäuse, das konfiguriert ist, um die Filtertrommel (z.B. im Wesentlichen) zu umgeben, wobei die Filtertrommel innerhalb dieses Zentrifugengehäuses rotierbar ist. Das Zentrifugengehäuse kann ferner aufweisen wenigstens eine Flüssigkeit-Austrag-Öffnung, wenigstens eine Feststoff-Austrag-Öffnung und wenigstens eine Zuführ-Öffnung (z.B. zum Zuführen einer zu filtrierenden Suspension).

Ein weiteres Beispiel einer Filtrationsvorrichtung ist hierin offenbart, welche in einer Ausführungsform gemäß dem beanspruchten Gegenstand nicht enthalten ist, welche als Scheibenfilter-Filtrationsvorrichtung bereitgestellt sein kann, mit: einer mit dem zuvor genannten wenigstens einen Scheibenkörper verbundenen Antriebswelle, die sich z.B. koaxial zur Scheibenkörper-Zentralachse erstreckt und mittels der der wenigstens eine Scheibenkörper drehantreibbar ist, und einer Antriebsvorrichtung (z.B. einem Antriebsmotor), die mit der Antriebswelle wirkverbunden ist, so dass ein von der Antriebsvorrichtung ausgehendes Drehmoment mittels der Antriebswelle auf den wenigstens einen Scheibenkörper übertragbar ist (z.B., in Betrieb, übertragen wird). Die Antriebswelle kann zum Beispiel mittels eines ersten und eines zweiten Lagers drehgelagert sein und kann zum Beispiel mittels einer mechanischen Kopplung (z.B. mittels Zahnräder, einer Kette und/oder eines Riemens) mit der Antriebsvorrichtung verbunden sein, so dass ein Drehmoment übertragbar ist.

Die Scheibenfilter-Filtrationsvorrichtung kann ferner bereitgestellt sein mit einer Wanne, die konfiguriert ist, um die zu filternde Suspension aufzunehmen, wobei der wenigstens eine Scheibenkörper teilweise in die Wanne eingreift und innerhalb dieser Wanne rotierbar ist.

Ferner ist ein weiteres Beispiel einer Filtrationsvorrichtung hierin offenbart, welche in einer Ausführungsform gemäß dem beanspruchten Gegenstand nicht enthalten ist, welche als eine Drehkammerfilter-Filtrationsvorrichtung mit einem Filterrotor ausgebildet sein kann, von welchem der Filtertuch-Stützkörper gebildet ist und welcher eine Filterrotorlängsachse definiert, die mit der Stützkörper-Drehachse zusammenfällt, und welcher eine Filterrotorumfangswand aufweist, die sich rings um die Filterrotorlängsachse herum erstreckt und die eine Umfangswandaußenseite hat, welche durch vorspringende Elemente, die von der Umfangswandaußenseite aus radial nach außen hin vorspringen, unterteilt ist, so dass an der Umfangswandaußenseite eine Mehrzahl von Umfangswandaußenseite-Segmenten gebildet sind, welche durch die vorspringenden Elemente voneinander getrennt sind und von welchen die Filtertuch-Anbringfläche ausgebildet ist. In jedem Umfangswandaußenseite-Segment kann ein Filtertuchteil einer Mehrzahl von Filtertuchteilen vorgesehen sein, wobei die Mehrzahl von Filtertuchteilen das Filtertuch bilden.

Die Drehkammerfilter-Filtrationsvorrichtung kann ferner bereitgestellt sein mit: einer mit dem zuvor genannten Filterrotor verbundenen Antriebswelle, die sich z.B. koaxial zur Filterrotorlängsachse erstreckt und mittels der der Filterrotor drehantreibbar ist, und einer Antriebsvorrichtung (z.B. einem Antriebsmotor), die mit der Antriebswelle wirkverbunden ist, so dass ein von der Antriebsvorrichtung ausgehendes Drehmoment mittels der Antriebswelle auf den Filterrotor übertragbar ist (z.B., in Betrieb, übertragen wird). Die Antriebswelle kann zum Beispiel mittels eines oder mehrerer Lager/s drehgelagert sein und kann zum Beispiel mittels einer mechanischen Kopplung (z.B. mittels Zahnräder, einer Kette und/oder eines Riemens) mit der Antriebsvorrichtung verbunden sein, so dass ein Drehmoment übertragbar ist.

Die Drehkammerfilter-Filtrationsvorrichtung kann ferner bereitgestellt sein mit einem Drehkammerfiltergehäuse, das konfiguriert ist, um den Filterrotor (z.B. im Wesentlichen) zu umgeben, wobei der Filterrotor innerhalb dieses Drehkammerfiltergehäuses rotierbar ist. Das Drehkammerfiltergehäuse kann ferner aufweisen wenigstens eine Feststoff-Austrag-Öffnung und wenigstens eine Zuführ-Öffnung (z.B. zum Zuführen einer zu filtrierenden Suspension). Ferner kann der der Filterrotor eine Mehrzahl von Flüssigkeit-Austrag-Kanälen aufweisen.

Die zuvor beschriebenen Ausführungsbeispiele der Erfindung ermöglichen eine einfache und schnelle Montage und Demontage des Filtertuchs an einem bzw. dem Filtertuch-Stützkörper, wobei dieses sicher gehalten werden kann. Ferner, im Gegensatz zu konventionellen Filtertuch-Befestigungsvorrichtungen, die z.B. mit Nuten ausgestattete Profilleisten zum Befestigen eines Filtertuchs verwenden, stellt die Erfindung Lösungen bereit, die zu einer Verringerung von Toträumen und von Spalten und somit von Ablagerungsmöglichkeiten des Feststoffs der zu filternden Suspension führen, da auf konventionelle mit Nuten ausgestattete Profilleisten vollends (z.B. bei Rein-Magnetische-Befestigungsvariante) oder nahezu (z.B. bei Hybrid-Befestigungsvariante) verzichtet werden kann. Demzufolge können z.B. die Reinigungsfähigkeit und der erzielbare Reinigungsgrad der Filtrationsvorrichtungen der Erfindung verbessert werden, so dass zum Beispiel die Filtrationsvorrichtungen der Erfindung auch in sensiblen Branchen wie beispielsweise der Lebensmittelbranche einfach und effizient eingesetzt werden können und zum Beispiel die Filtrationsvorrichtungen der Erfindung GMP-geeignet (GMP = Good Manufacturing Practice, aus dem Englischen: Gute Herstellungspraxis) sind. Ferner können eventuell durch die Erfindung Herstellungskosten und Betriebskosten von Filtrationsvorrichtungen reduziert werden, da beispielsweise auf konventionelle Profilleisten zur Befestigung des Filtertuchs verzichtet werden kann, die in ihrer Herstellung kostenintensiv sein können und deren Handhabung zur Montage und Demontage des Filtertuchs an dem Filtertuch-Stützkörper mitunter viel Erfahrung des jeweiligen Anwenders bzw. Facharbeiters erfordert. Da, wie bereits beschrieben, auf konventionelle mit Nuten ausgestattete Profilleisten zur Befestigung des Filtertuchs verzichtet werden kann, können erfindungsseitig z.B. Trennleisten der Filtertrommel einer bzw. der Vakuum- und/oder Druck-Filtrationsvorrichtungen z.B. schmäler ausgebildet sein/werden, wodurch beispielsweise zum einen wiederum Herstellungskosten der Vakuum- und/oder Druck-Filtrationsvorrichtung reduziert sein können und andererseits eine größere aktive Filterfläche des Filtertuchs erzielt werden kann, was wiederum zu einer höheren Filtereffizienz der Vakuum- und/oder Druck-Filtrationsvorrichtungen führen kann.

Die Erfindung wird nachfolgend anhand beispielhafter Ausführungsformen mit Bezugnahme auf die Zeichnungen erläutert. In der Zeichnung zeigen:
Fig. 1 schematisch eine Filtrationsvorrichtung in Form einer Vakuum- und/oder Druck-Filtrationsvorrichtung gemäß einer Ausführungsform der Erfindung in einer perspektivischen Seitenansicht,
Fig. 2A schematisch eine Magnetbefestigungseinrichtung einer Filtrationsvorrichtung gemäß einer Ausführungsform der Erfindung in einer Schnittansicht,
Fig. 2B schematisch eine Magnetbefestigungseinrichtung einer Filtrationsvorrichtung gemäß einer Ausführungsform der Erfindung in einer Schnittansicht,
Fig. 3 schematisch eine Magnetbefestigungseinrichtung einer Filtrationsvorrichtung gemäß einer Ausführungsform der Erfindung in einer Schnittansicht,
Fig. 4 schematisch eine Magnetbefestigungseinrichtung einer Filtrationsvorrichtung gemäß einer Ausführungsform der Erfindung in einer Schnittansicht,
Fig. 5 schematisch eine Magnetbefestigungseinrichtung einer Filtrationsvorrichtung gemäß einer Ausführungsform der Erfindung in einer Schnittansicht,
Fig. 6 schematisch eine Magnetbefestigungseinrichtung einer Filtrationsvorrichtung gemäß einer Ausführungsform der Erfindung in einer Schnittansicht,
Fig. 7 schematisch eine Magnetbefestigungseinrichtung einer Filtrationsvorrichtung gemäß einer Ausführungsform der Erfindung in einer Schnittansicht,
Fig. 8A, Fig. 8B und Fig. 8C schematisch jeweils eine Magnetbefestigungseinrichtung einer Filtrationsvorrichtung gemäß jeweiliger weiterer Ausführungsformen der Erfindung in einer jeweiligen Schnittansicht,
Fig. 9 schematisch eine Klemmbefestigungseinrichtung einer Filtrationsvorrichtung in Form einer Vakuum- und/oder Druck-Filtrationsvorrichtung gemäß einer Ausführungsform der Erfindung in einer Schnittansicht,
Fig. 10 schematisch eine beispielhafte Filtrationsvorrichtung in Form einer Filterzentrifuge-Filtrationsvorrichtung in einer Seitenansicht,
Fig. 11 schematisch eine beispielhafte Filtrationsvorrichtung in Form einer Scheibenfilter-Filtrationsvorrichtung in einer perspektivischen Seitenansicht, und
Fig. 12 schematisch eine beispielhafte Filtrationsvorrichtung in Form einer Drehkammerfilter-Filtrationsvorrichtung in einer perspektivischen Seitenansicht.

Über sämtliche Figuren hinweg werden gleiche oder wesensgleiche Bauteile mit den gleichen Bezugszeichen versehen.

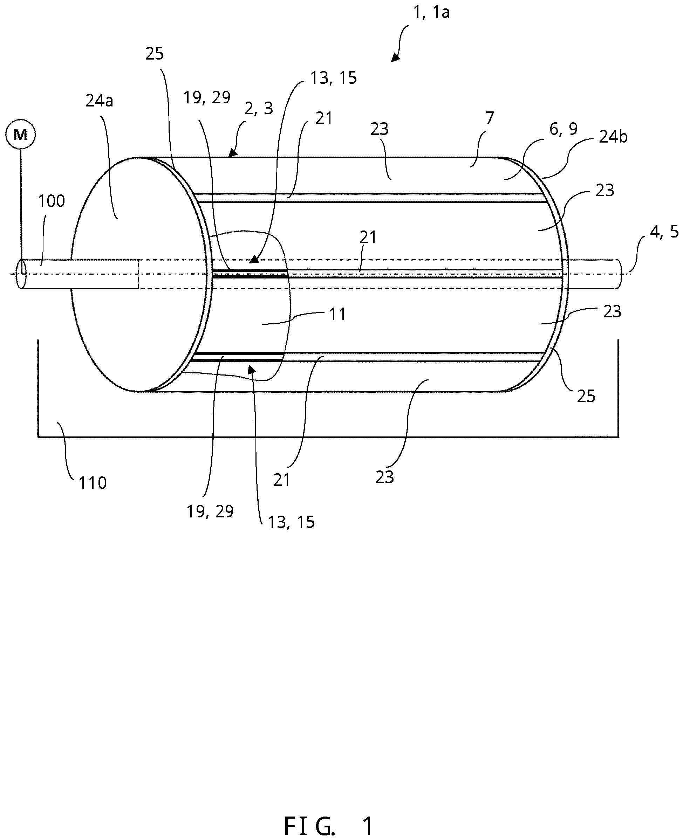

Bezugnehmend auf Fign. 1 bis 12 ist eine Filtrationsvorrichtung 1 (zum Filtern einer Suspension, welche Feststoff und Flüssigkeit umfasst) gemäß einer Ausführungsform bereitgestellt mit einem Filtertuch 11 (z.B. einem Filtergewebetuch z.B. in Form von einem Kunststoff- und/oder einem Metallgewebe), einem Filtertuch-Stützkörper 2, welcher um eine Stützkörper-Drehachse 4 herum drehbar gelagert ist und welcher eine Filtertuch-Anbringfläche 6 aufweist, auf welcher das Filtertuch 11 anbringbar bzw. angebracht ist, und einer Befestigungseinrichtung 13, mittels deren das Filtertuch 11 an der Filtertuch-Anbringfläche 6 lösbar befestigbar bzw. lösbar befestigt ist, wobei die Befestigungseinrichtung 13 eine Magnetbefestigungseinrichtung 15 aufweist, mittels deren das Filtertuch 11 via magnetische Kraft an der Filtertuch-Anbringfläche 6 befestigbar bzw. lösbar befestigt ist.

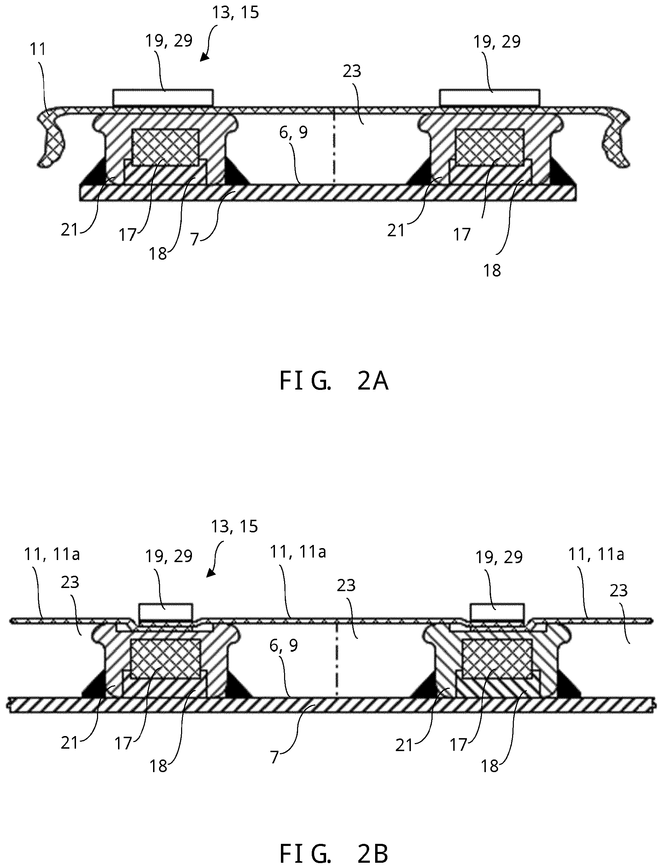

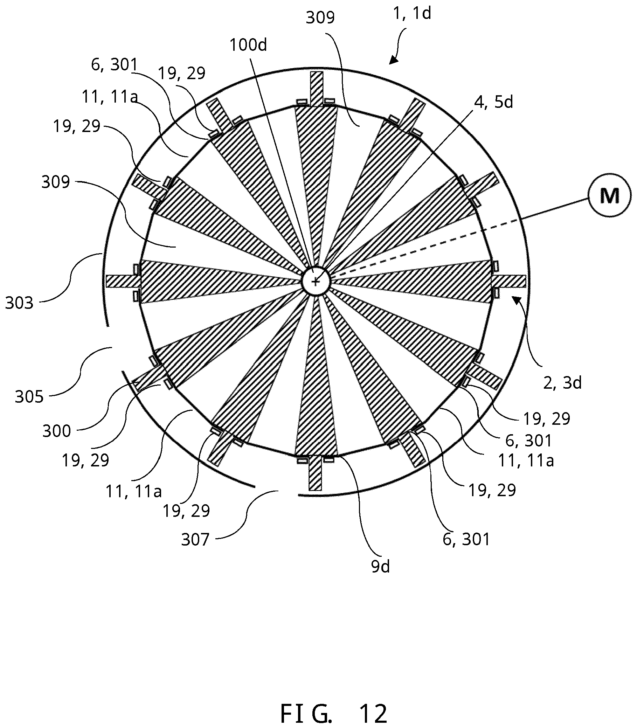

Bezugnehmend auf Fign. 1 bis 2A und 3 bis 11 kann das besagte Filtertuch 11 einstückig (z.B. aus einem Stück) sein. Das Filtertuch 11 kann aber auch aus einer Mehrzahl von (voneinander) separaten Filtertuchteilen 11a gebildet sein (siehe z.B. Fign. 2B und 12), die zusammen genommen das Filtertuch 11 bilden und die z.B. jeweilig benachbart zueinander angeordnet sein können, so dass z.B. diese Mehrzahl von separaten Filtertuchteilen 11a eine im Wesentlichen geschlossene Filtertuchfläche bilden können.

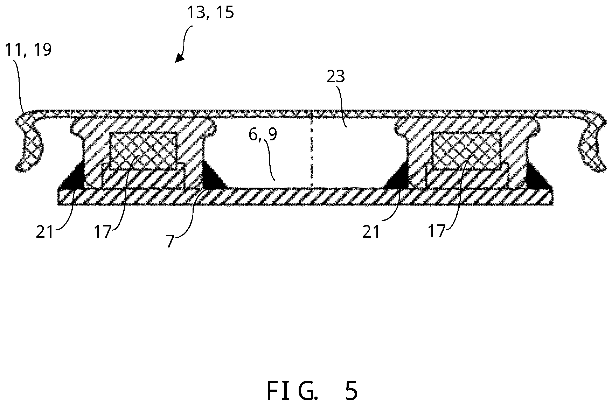

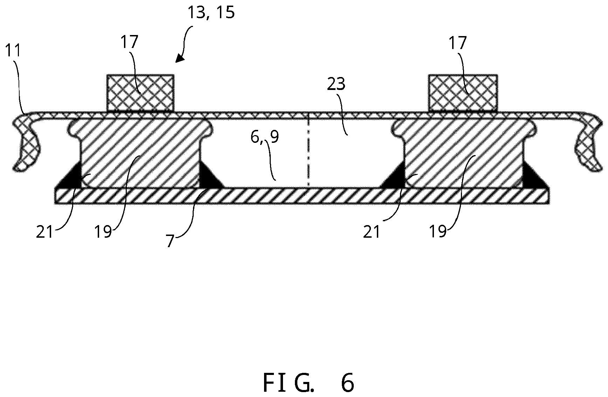

Bezugnehmend auf die Fign. 1 bis 5 und 7 bis 8C weist die Magnetbefestigungseinrichtung 15 auf: mehrere magnetische Elemente 17, welche an dem Filtertuch-Stützkörper 2 angeordnet sind, und mehrere magnetische oder magnetisierbare Gegenelemente 19, welche an dem Filtertuch 11 angeordnet sind (vgl. Fign. 2A bis 4 und 7 bis 8C) oder welche von dem Filtertuch 11 ausgebildet sind (vgl. Fig. 5), wobei die magnetische Kraft zwischen den magnetischen Elementen 17 und den magnetischen oder magnetisierbaren Gegenelementen 19 wirkt. Bezugnehmend auf die Fig. 6 weist die Magnetbefestigungseinrichtung 15 auf: mehrere magnetische Elemente 17, welche an dem Filtertuch 11 angeordnet sind, und mehrere magnetische oder magnetisierbare Gegenelemente 19, welche von dem Filtertuch-Stützkörper 2 ausgebildet sind.

Bezugnehmend auf die Fign. 1 bis 8C ist das jeweilige magnetische Element 17 von einem jeweiligen Permanentmagnet gebildet, und das jeweilige magnetische oder magnetisierbare Gegenelement 19 ist aus einem ferromagnetischen und/oder einem Duplex-Material hergestellt. Ein Duplex-Material kann beispielsweise X2CrNiMoN 22-5-3 (Werkstoffnummer: 1.4462) sein.

Bei der Ausführungsform von Fig. 1 ist die Filtrationsvorrichtung 1 ausgebildet als eine Vakuum- und/oder Druck-Filtrationsvorrichtung 1a mit einer Filtertrommel 3, von welcher der Filtertuch-Stützkörper 2 gebildet ist und welche eine Filtertrommellängsachse 5 definiert, die mit der Stützkörper-Drehachse 4 zusammenfällt, und welche eine Filtertrommelumfangswand 7 aufweist, die sich rings um die Filtertrommellängsachse 5 herum erstreckt und die eine Umfangswandaußenseite 9 hat, von welcher die Filtertuch-Anbringfläche 6 ausgebildet ist. Hierbei ist die Vakuum- und/oder Druck-Filtrationsvorrichtung 1a der Ausführungsform der Fig. 1 ferner bereitgestellt mit: einer mit der zuvor genannten Filtertrommel 3 verbundenen Antriebswelle 100, die sich koaxial zur Filtertrommellängsachse 5 erstreckt und mittels der die Filtertrommel 3 drehantreibbar ist, und einem Antriebsmotor M, der mit der Antriebswelle 100 wirkverbunden ist, so dass ein von dem Antriebsmotor M ausgehendes Drehmoment mittels der Antriebswelle 100 auf die Filtertrommel 3 übertragbar ist (z.B. im Betrieb übertragen wird). Die Vakuum- und/oder Druck-Filtrationsvorrichtung 1a der Ausführungsform der Fig. 1 ist ferner bereitgestellt mit einer Wanne 110, die konfiguriert ist, um die zu filternde Suspension aufzunehmen, wobei die Filtertrommel 3 teilweise in die Wanne 110 eingreift, so dass im Rahmen der Rotation der Filtertrommel 3 ein stets wechselndes, unteres Umfangsstück der Filtertrommel 3 die in der Wanne 110 angeordnete Suspension durchläuft.

Die in Fig. 1 gezeigte Filtertrommel 3 weist eine Mehrzahl von Trennleisten 21 auf, welche in Umfangsrichtung der Filtertrommel 3 im gleichen Abstand voneinander angeordnet sind und welche sich an der Filtertrommelumfangswand 7 entlang der Filtertrommellängsachse 5 erstrecken, um dadurch in Umfangsrichtung der Filtertrommel 3 eine korrespondierende Mehrzahl von Filterzellen 23 zwischen sich zu begrenzen. Die magnetischen Elemente 17 sind z.B. jeweilig in den Trennleisten 21 aufgenommen, wie schematisch in (bei) den (Ausführungsformen der) Fign. 2A bis 5 und 7 bis 8C gezeigt ist. Bei den Ausführungsformen der Fign. 2A bis 5 und 7 bis 8C sind die jeweiligen magnetischen Elemente 17 mittels eines jeweilig zugeordneten Magnetisches-Element-Halters 18 (in den jeweiligen Trennleisten 21) gestützt.

Ferner weist die in Fig. 1 gezeigte Filtertrommel 3 zwei Ringleisten 25 (z.B. eine erste und eine zweite Ringleiste) auf, wobei die Filtertrommel 3 nicht auf diese Anzahl von Ringleisten 25 beschränkt ist und ebenfalls eine andere Mehrzahl von Ringleisten 25 aufweisen kann. Die Ringleisten 25 sind in Längsrichtung der Filtertrommel 3 im Abstand voneinander angeordnet und erstrecken sich an der Filtertrommelumfangswand 7 in Umfangsrichtung der Filtertrommel 3. Wie in Fig. 1 gezeigt ist, sind die (zwei) Ringleisten 25 an einer vorderen Stirnseite 24a und an einer hinteren Stirnseite 24b der Filtertrommel 3 jeweilig angeordnet. Die Ringleisten 25 begrenzen somit in Längsrichtung der Filtertrommel 3 die zuvor genannte Mehrzahl von Filterzellen 23 (wobei die Trennleisten 21 in Umfangsrichtung der Filtertrommel 3 die Mehrzahl von Filterzellen 23 zwischen sich begrenzen). Weitere Ringleisten 25, zum Beispiel eine dritte Ringleiste 25, die zwischen den beiden stirnseitig angeordneten Ringleisten 25 angeordnet sein könnte/n, würden jeweilig zu einer (weiteren) Unterteilung der Filterzellen 23 führen. In einer zu der Mehrzahl von Trennleisten 21 analogen Weise (vgl. Fign. 2A bis 5, 7 bis 8C) kann auch in der Mehrzahl von Ringleisten 25 ein Teil (z.B. eine Teilanzahl) der magnetischen Elemente 17 aufgenommen sein, die beispielsweise mittels eines jeweilig zugeordneten Magnetisches-Element-Halters 18 gestützt sein können.

Bei der Ausführungsform von Fig. 1 und Fig. 2A sind die magnetischen oder magnetisierbaren Gegenelemente 19 jeweils als ein von dem Filtertuch 11 separates (z.B. langgestrecktes) Klemmleistenbauteil 29 (z.B. eine Klemmleiste) ausgebildet, mittels dessen das Filtertuch 11 (in Fig. 1 anteilig schematisch dargestellt) von einer Filtertuch-Außenseite her gegen die Trennleisten 21 und damit gegen die Umfangswandaußenseite 9 der Filtertrommel 3 (d.h. gegen die Filtertuch-Anbringfläche 6) via Magnetkraft geklemmt ist, so dass das Filtertuch 11 dadurch an der Umfangswandaußenseite 9 (d.h. an der Filtertuch-Anbringfläche 6) via Magnetkraft klemmend befestigt ist. Hierbei liegt das besagte Klemmleistenbauteil 29 über der jeweiligen Trennleiste 21 und auf dem Filtertuch 11 lose auf und ist ausschließlich mittels der magnetischen Kraft an der jeweiligen Trennleiste 21 und damit an der Filtertrommel 3 festgehalten.

Die Ausführungsform von Fig. 2B ist im Allgemeinen wie die Ausführungsform von Fig. 2A ausgebildet, so dass im Folgenden nur die Unterschiede beschrieben werden. Das Filtertuch 11 ist nicht wie bei der Ausführungsform der Fig. 2A einstückig, sondern ist aus einer Mehrzahl von separaten Filtertuchteilen 11a gebildet. Die jeweiligen Filtertuchteile 11a sind über den Trennleisten 21 überlappend angeordnet, wobei die überlappenden Bereiche der jeweiligen Filtertuchteile 11a und damit die Filtertuchteile 11a mittels des jeweiligen Klemmleistenbauteils 29 von der Außenseite des Filtertuchs 11 her gegen die Trennleisten 21 und damit gegen die Umfangswandaußenseite 9 der Filtertrommel 3 (d.h. gegen die Filtertuch-Anbringfläche 6) via Magnetkraft geklemmt sind, so dass die jeweiligen Filtertuchteile 11a dadurch an der Umfangswandaußenseite 9 (d.h. an der Filtertuch-Anbringfläche 6) via Magnetkraft klemmend befestigt sind, so dass diese eine im Wesentlichen geschlossene Filtertuchfläche bilden.

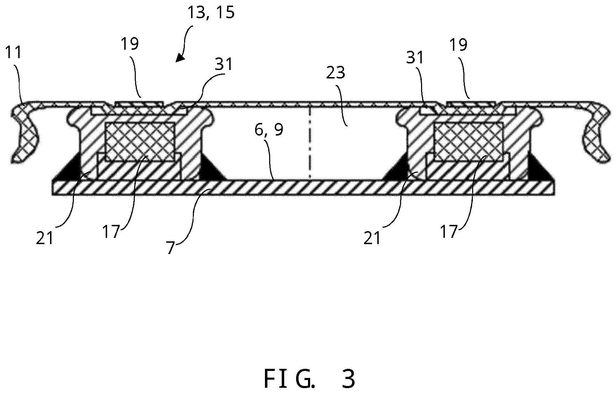

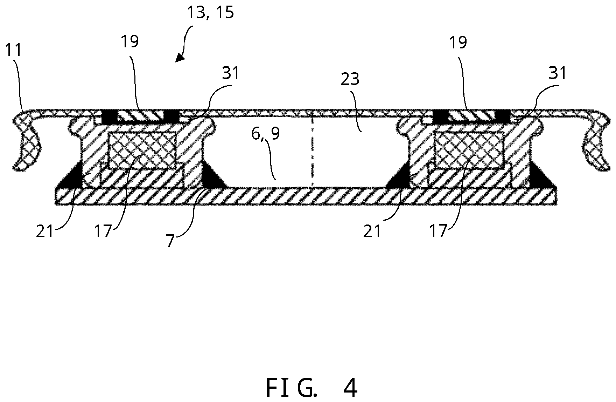

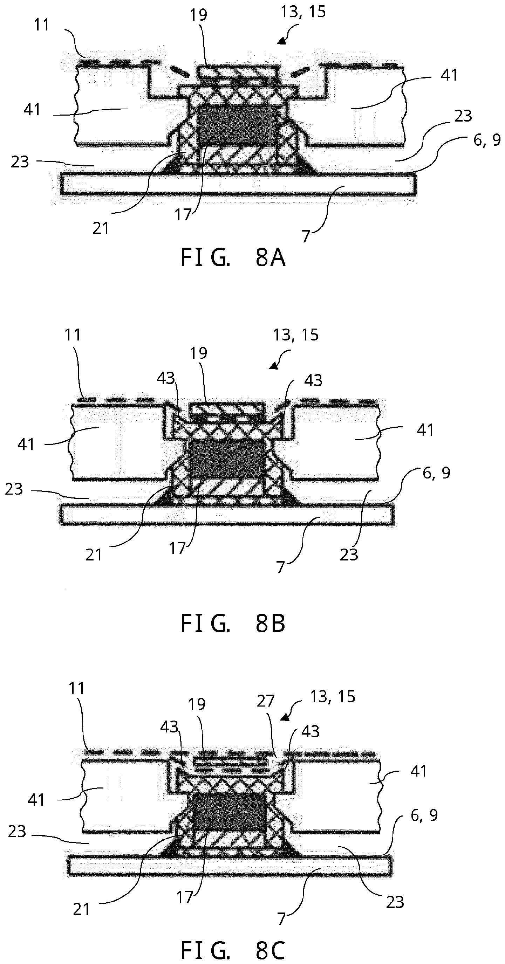

Bei den Ausführungsformen von Fig. 3, Fig. 4 und Fig. 8C sind die magnetischen oder magnetisierbaren Gegenelemente 19 jeweils als ein von dem Filtertuch 11 separates Bauteil ausgebildet, das in das Filtertuch 11 eingebracht ist oder an dem Filtertuch 11 befestigt ist. Hierbei zeigt die Ausführungsform von Fig. 3 exemplarisch an das Filtertuch 11 (an die Filtertuch-Außenseite) angeklebte magnetische oder magnetisierbare Gegenelemente 19, welche das Filtertuch 11 an der Umfangswandaußenseite 9 der Filtertrommel 3 (via Magnetkraft) klemmend befestigen (die magnetischen oder magnetisierbaren Gegenelemente 19 könnten hierbei allerdings auch in oder an das Filtertuch 11 ein- oder angenäht oder eingeklebt sein). Die Ausführungsform von Fig. 4 wiederum zeigt exemplarisch zwei in das Filtertuch 11 laminierte magnetische oder magnetisierbare Gegenelemente 19, welche das Filtertuch 11 an der Umfangswandaußenseite 9 der Filtertrommel 3 (zumindest teilweise) (via Magnetkraft) klemmend befestigen. Bei der Ausführungsform der Fig. 8C ist ein jeweiliges magnetisches oder magnetisierbares Gegenelement 19 in einer Tasche 27 (z.B. in einer Aufnahmetasche, z.B. in einer Einschubtasche) aufgenommen, die in/an dem Filtertuch 11 ausgebildet ist, um so das Filtertuch 11 an der Umfangswandaußenseite 9 der Filtertrommel 3 (zumindest teilweise) (via Magnetkraft) klemmend zu befestigen.

Bei den Ausführungsformen der Fig. 3 und Fig. 4 ist zudem eine radial (z.B. radial bezüglich der Filtertrommellängsachse 5) nach außen offene Trennleiste-Nut 31 in der jeweiligen Trennleiste 21 ausgebildet, und, im dargestellten Befestigungszustand, in welchem das Filtertuch 11 an der Umfangswandaußenseite 9 (über die Trennleisten 21 hinweg) befestigt ist, greift das Filtertuch 11 in die Trennleiste-Nut 31 ein und wird von dem magnetischen oder magnetisierbaren Gegenelement 19 in diesem Eingriff mit der Trennleiste-Nut 31 gehalten. Hierbei greift das magnetische oder magnetisierbare Gegenelement 19 seinerseits zumindest teilweise in die Trennleiste-Nut 31 ein. Hierdurch können z.B. die Außenseiteflächen (die radial von der Filtertrommellängsachse 5 nach außen hin weggewandt sind) des jeweiligen magnetischen oder magnetisierbaren Gegenelements 19 und des Filtertuchs 11 im Befestigungszustand eine gemeinsame im Wesentlichen ebene Außenseitefläche (z.B. eine Außenseitefläche, deren Topographie im Wesentlichen keine radial weiter nach außen hervorstehenden Elemente aufweist) zusammen bilden (vgl. Fig. 3 und/oder Fig. 4), wodurch Stufen und Toträume an dem Filtertuch 11 und somit Ablagerungsmöglichkeiten des Feststoffs der zu filternden Suspension verringert sein können.

Bezugnehmend auf die in Fig. 5 gezeigte Ausführungsform sind die magnetischen oder magnetisierbaren Gegenelemente 19 als ein zusammen mit dem Filtertuch 11 integral hergestelltes Element ausgebildet (hierbei können die magnetischen oder magnetisierbaren Gegenelemente 19 von magnetischen oder magnetisierbaren Fäden gebildet sein, aus welchen das Filtertuchmaterial zumindest teilweise gebildet (z.B. gewebt) ist), so dass das Filtertuch 11 in dieser Ausführungsform selbst als magnetisches oder magnetisierbares Gegenelement 19 wirkt und via magnetische Kraft mittels der magnetischen Elemente 17, die jeweils in den Trennleisten 21 der Filtertrommel 3 aufgenommen sind, angezogen wird und folglich an der Filtertrommel 3 befestigt ist.

Bei der Ausführungsform von Fig. 6 sind die magnetischen Elemente 17 an dem Filtertuch 11 angeordnet und die magnetischen oder magnetisierbaren Gegenelemente 19 sind durch die Trennleisten 21 der Filtertrommel 3, welche in dieser Ausführungsform aus einem ferromagnetischen und/oder einem Duplex-Material hergestellt sind, ausgebildet. Bei der Ausführungsform der Fig. 6 ist es aber auch denkbar, dass z.B. die magnetischen oder magnetisierbaren Gegenelemente 19 jeweilig als ein separates Bauteil ausgebildet sind, welches in der Filtertrommel 3 aufgenommen ist und/oder an der Filtertrommel 3 angeordnet und befestigt ist (jeweils nicht in den Figuren gezeigt). Die magnetischen Elemente 17 können ferner eine nicht in den Figuren gezeigte Haltevorrichtung (z.B. einen Halterahmen, z.B. eine Halteleiste) (z.B. jeweils oder z.B. teilweise oder z.B. anteilig) aufweisen, die konfiguriert ist, um die magnetischen Elemente 17 an dem Filtertuch 11 anzuordnen.

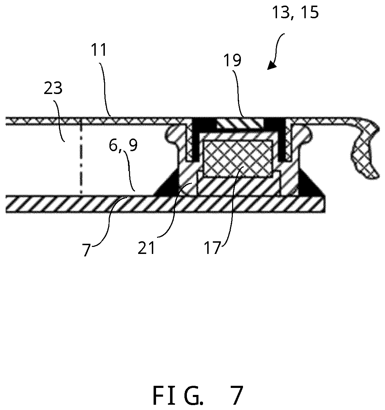

Die Fig. 7 zeigt einen (Umfangs-)Anfang und/oder ein (Umfangs-)Ende eines bzw. des Filtertuchs 11 und zeigt ähnlich wie bei der Ausführungsform von Fig. 4 ein in diesen Bereich des Filtertuchs 11 laminiertes magnetisches oder magnetisierbares Gegenelement 19, das sich am zugeordneten Filtertuch-Rand entlang der Filtertrommellängsachse 5 erstreckt und mittels dessen das Filtertuch 11 (zumindest teilweise) befestigt ist. Der Anfang und/oder das Ende des Filtertuchs 11 weist, wie in Fig. 7 dargestellt, zusätzlich zu dem einlaminierten magnetischen oder magnetisierbaren Gegenelemente 19 eine Winkelleiste auf, die konfiguriert ist, um in eine Aufnahme (z.B. eine Winkelleiste-Aufnahme, z.B. eine Winkelleiste-AufnahmeNut), die in oder an der Trennleiste 21 der Filtertrommel 3 ausgebildet ist (an der der Anfang und/oder das Ende des Filtertuchs 11 angeordnet ist), aufgenommen zu sein (bzw. zu werden), um so ferner den Anfang und/oder das Ende des Filtertuchs 11 an der Filtertrommel 3 (über die Trennleiste 21) zu fixieren.

Bezugnehmend auf Fig. 8A bis Fig. 8C ist die Vakuum- und/oder Druck-Filtrationsvorrichtung 1a ferner mit einer Mehrzahl von Filterzelleneinlagen 41 bereitgestellt. Die jeweiligen Filterzelleneinlagen 41 der Mehrzahl von Filterzelleneinlagen 41 sind jeweils zwischen der Umfangswandaußenseite 9 der Filtertrommel 3 und dem Filtertuch 11 und benachbart (z.B. angrenzend) zu den jeweiligen Trennleisten 21 (und/oder z.B. den jeweiligen Ringleisten 25) angeordnet und jeweils jeweiligen Filterzellen 23 zugeordnet, so dass die Filterzelleneinlagen 41 jeweils einen Drainageraum für die im Rahmen des Filterbetriebs aus der Suspension abgetrennte Flüssigkeit bilden. Die radial nach außen gewandte Seite der jeweiligen Filterzelleneinlagen 41 befindet sich dabei weiter radial außen als die radial nach außen gewandte Seite der jeweiligen Trennleisten 21 (und/oder z.B. der jeweiligen Ringleisten 25), so dass die auf beiden Seiten der jeweiligen Trennleisten 21 (und/oder z.B. der jeweiligen Ringleisten 25) angeordneten Filterzelleneinlagen 41 eine Vertiefung zwischen sich bilden. In diese Vertiefung greift das Filtertuch 11 im (dargestellten) Befestigungszustand, in welchem das Filtertuch 11 an der Umfangswandaußenseite 9 befestigt ist, ein und wird von dem magnetischen oder magnetisierbaren Gegenelement 19 in diesem Eingriff in der Vertiefung gehalten. Das magnetische oder magnetisierbare Gegenelement 19 greift seinerseits (zumindest teilweise) in diese Vertiefung ein.

Bezugnehmend auf Fig. 8A und Fig. 8B ist das magnetische oder magnetisierbare Gegenelement 19 in ähnlicher Weise wie bei den beispielhaften Ausführungsformen der Figuren 2 und 3 ausgebildet sein (d.h. zum Beispiel als ein separates Klemmleistenbauteil oder zum Beispiel als ein separates Bauteil, welches an das Filtertuch 11 angeklebt ist (aber auch in oder an das Filtertuch 11 ein- oder angenäht oder eingeklebt sein kann)). Im Gegensatz zu Fig. 8A erstrecken sich an der radial nach außen gewandten Seite der in Fig. 8B (und der in Fig. 8C) dargestellten Trennleiste 21 Führungselemente 43 radial nach außen hin (bzw. ist in der der radial nach außen gewandten Seite der in Fig. 8B (und der in Fig. 8C) dargestellten Trennleiste 21 eine bzw. die Trennleiste-Nut 31 ausgebildet, deren jeweilige Seitenwände als diese Führungselemente 43 fungieren), wobei die Führungselemente 43 jeweilig an gegenüberliegenden Seitenrändern der Trennleiste 21 angeordnet sind und jeweils eine zueinander gegenläufig geneigte, sich zugewandte Flächen aufweisen. Durch diese Führungselemente 43 kann z.B. zum einen das Filtertuch 11 gerichtet (z.B. steiler) aus der Vertiefung geführt sein und somit kann eine schmalere Vertiefung zwischen den Filterzelleneinlagen 41 realisiert werden, als wenn keine Führungselemente 43 vorhanden sind, und zum anderen kann das magnetische oder magnetisierbare Gegenelement 19 auf der jeweiligen Trennleiste 21 zentriert sein/werden.

Bei der Ausführungsform der Fig. 8C ist, wie bereits zuvor allgemein beschrieben, das jeweilige magnetische oder magnetisierbare Gegenelemente 19 in einer Tasche 27 (z.B. in einer Aufnahmetasche, z.B. in einer Einschubtasche) aufgenommen, die in dem Filtertuch 11 ausgebildet ist. Hierbei ist das magnetische oder magnetisierbare Gegenelement 19 ein separat ausgebildetes Bauteil.

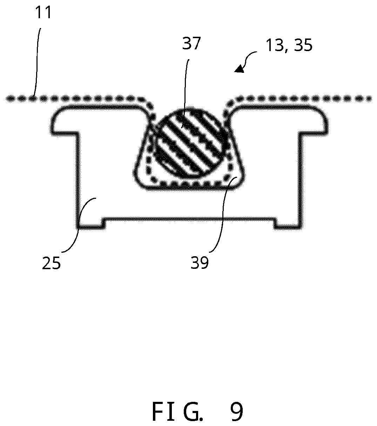

In den zuvor beschriebenen Ausführungsformen der Vakuum- und/oder Druck-Filtrationsvorrichtung 1a ist ein bzw. das Filtertuch 11 an der Filtertrommel 3 (der Filtertrommelumfangswand 7) rein bzw. ausschließlich via magnetische Kraft an der Filtertrommel 3 befestigt (Rein-Magnetische-Befestigungsvariante). In diesem Fall ist die Befestigungseinrichtung 13 (z.B. ausschließlich) als Magnetbefestigungseinrichtung 15 ausgebildet. Jedoch kann das Filtertuch 11 auch mittels einer Kombination konventioneller Befestigungsmittel und magnetischer Kraft an der Filtertrommel 3 befestigt sein/werden (Hybrid-Befestigungsvariante). Bezugnehmend auf Fig. 9 weist die Befestigungseinrichtung 13 daher ferner z.B. eine (magnetkraftfreie) Klemmbefestigungseinrichtung 35 auf, welche eine Mehrzahl von Eingriff-Stücken 37 (z.B. eine Mehrzahl von Ringstäben, z.B. eine Mehrzahl von Ringkedern) aufweist, wobei in Fig. 9 exemplarisch ein Eingriff-Stück 37 dargestellt ist. In den jeweiligen oder einem Teil (z.B. einer Teilanzahl) der Ringleisten 25 der Filtertrommel 3 ist eine radial (z.B. radial bezüglich der Filtertrommellängsachse) nach außen offene Halte-Nut 39 umfänglich gebildet, wobei das Filtertuch 11 jeweils in Umfangsrichtung der Filtertrommel 3 darin festklemmbar ist bzw. in Fig. 9 festgeklemmt ist mittels des (jeweiligen) Eingriff-Stücks 37 (z.B. welches sich, im Festklemmzustand, in welchem das Filtertuch 11 in der Halte-Nut 39 klemmfixiert ist, in und entlang der Halte-Nut 39 erstreckt).

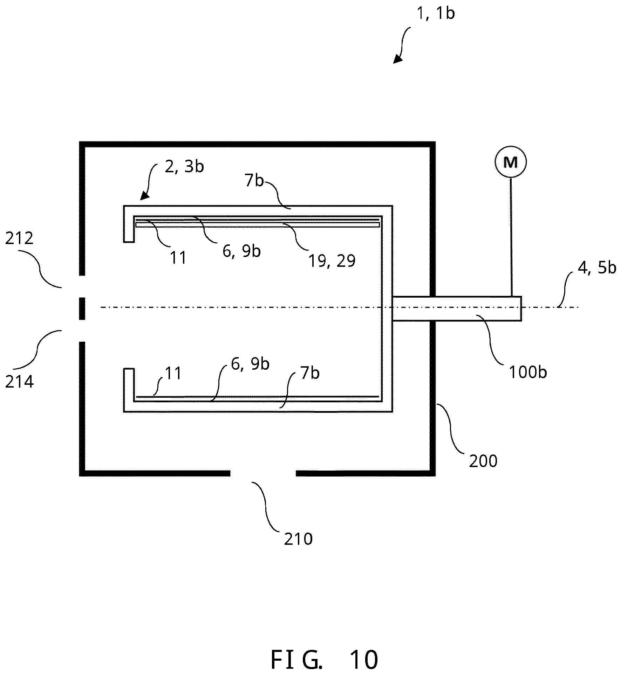

In einer in Fig. 10 schematisch gezeigten beispielhaften Ausführungsform ist die Filtrationsvorrichtung 1 ausgebildet als eine Filterzentrifuge-Filtrationsvorrichtung 1b mit einer Filtertrommel 3b, von welcher der Filtertuch-Stützkörper 2 gebildet ist und welche eine Filtertrommellängsachse 5b definiert, die mit der Stützkörper-Drehachse 4 zusammenfällt, und welche eine Filtertrommelumfangswand 7b aufweist, die sich rings um die Filtertrommellängsachse 5b herum erstreckt und die eine Umfangswandinnenseite 9b hat, von welcher die Filtertuch-Anbringfläche 6 ausgebildet ist. Hierbei ist die Filterzentrifuge-Filtrationsvorrichtung 1b ferner bereitgestellt mit: einer mit der zuvor genannten Filtertrommel 3b verbundenen Antriebswelle 100b, die sich koaxial zur Filtertrommellängsachse 5b erstreckt und mittels der die Filtertrommel 3b drehantreibbar ist, und einem Antriebsmotor M, der mit der Antriebswelle 100b wirkverbunden ist, so dass ein von dem Antriebsmotor M ausgehendes Drehmoment mittels der Antriebswelle 100b auf die Filtertrommel 3b übertragbar ist (z.B. im Betrieb übertragen wird). Ferner ist die in Fig. 10 schematisch dargestellte Filterzentrifuge-Filtrationsvorrichtung bereitgestellt mit einem Zentrifugengehäuse 200, das konfiguriert ist, um die Filtertrommel 3b (z.B. im Wesentlichen) zu umgeben, wobei die Filtertrommel 3b innerhalb dieses Zentrifugengehäuses 200 rotierbar ist. Das Zentrifugengehäuse 200 weist ferner auf (z.B. wenigstens) eine Flüssigkeit-Austrag-Öffnung 210, (z.B. wenigstens) eine Feststoff-Austrag-Öffnung 212 und (z.B. wenigstens) eine Zuführ-Öffnung 214 (z.B. zum Zuführen einer zu filtrierenden Suspension). Exemplarisch ist bei der Ausführungsform der Fig. 10 ähnlich wie bei der Ausführungsform der Fig. 1 und Fig. 2A das magnetische oder magnetisierbare Gegenelement 19 als ein von dem Filtertuch 11 separates (z.B. langgestrecktes) Klemmleistenbauteil 29 (z.B. eine Klemmleiste) ausgebildet, mittels dessen das Filtertuch 11 von radial innen her gegen die Umfangswandinnenseite 9b der Filtertrommel 3b (via Magnetkraft) geklemmt ist, so dass das Filtertuch 11 dadurch an der Umfangswandinnenseite 9b (via Magnetkraft) klemmend befestigt ist.

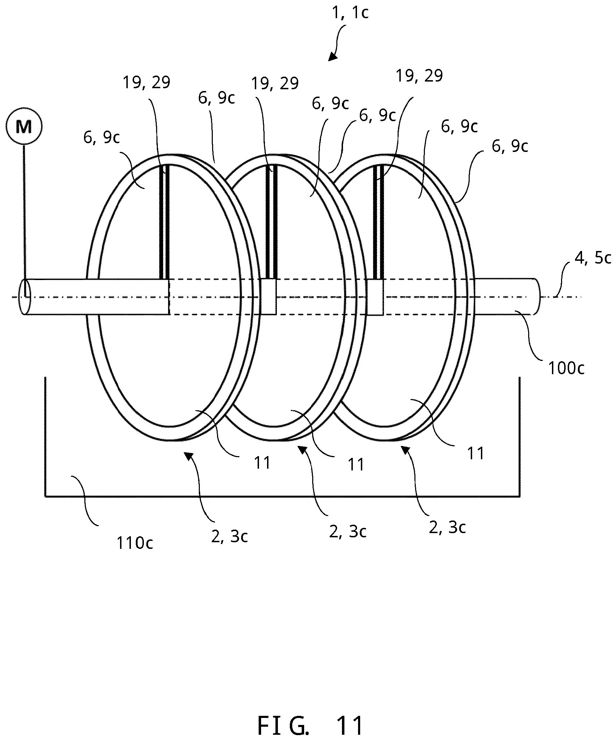

In einer anderen, in Fig. 11 schematisch gezeigten beispielhaften Ausführungsform ist die Filtrationsvorrichtung 1 ausgebildet als eine Scheibenfilter-Filtrationsvorrichtung 1c mit einer Mehrzahl von Scheibenkörpern 3c, von welchen ein jeweiliger Filtertuch-Stützkörper 2 gebildet ist und welche eine gemeinsame Scheibenkörper-Zentralachse 5c definieren, die quer durch die Scheibenkörper 3c verläuft und die mit der Stützkörper-Drehachse 4 zusammenfällt, und welche jeweils zwei entgegengesetzte Scheibenkörperflächen 9c haben, die quer zu der Scheibenkörper-Zentralachse 5c verlaufen, wobei an jeder der beiden Scheibenkörperflächen 9c eine Filtertuch-Anbringfläche 6 ausgebildet ist. Hierbei ist die Scheibenfilter-Filtrationsvorrichtung 1c ferner bereitgestellt mit: einer mit den zuvor genannten Scheibenkörpern 3c verbundenen Antriebswelle 100c, die sich koaxial zur Scheibenkörper-Zentralachse 5c erstreckt und mittels der die Scheibenkörper 3c drehantreibbar ist, und einem Antriebsmotor M, der mit der Antriebswelle 100c wirkverbunden ist, so dass ein von dem Antriebsmotor M ausgehendes Drehmoment mittels der Antriebswelle 100c auf den Scheibenkörper 3c übertragbar ist (z.B. im Betrieb übertragen wird). Ferner ist die in Fig. 11 schematisch gezeigte Scheibenfilter-Filtrationsvorrichtung 1c bereitgestellt mit einer Wanne 110c, die konfiguriert ist, um die zu filternde Suspension aufzunehmen, wobei der jeweilige Scheibenkörper 3c teilweise in die Wanne 110c eingreift und innerhalb dieser Wanne 110c rotierbar ist. Exemplarisch ist bei der Ausführungsform der Fig. 11 ähnlich wie bei den jeweiligen Ausführungsformen der Fig. 1, Fig. 2A und Fig. 10 das magnetische oder magnetisierbare Gegenelement 19 als ein von dem Filtertuch 11 separates (z.B. langgestrecktes) Klemmleistenbauteil 29 (z.B. eine Klemmleiste) ausgebildet, mittels dessen das Filtertuch 11 von der Filtertuch-Außenseite her gegen die Scheibenkörperfläche 9c des jeweiligen Scheibenkörpers 3c (via Magnetkraft) geklemmt ist, so dass das Filtertuch 11 dadurch an der Scheibenkörperfläche 9c (via Magnetkraft) klemmend befestigt ist.

In einer weiteren in Fig. 12 schematisch gezeigten beispielshaften Ausführungsform ist die Filtrationsvorrichtung 1 ausgebildet als eine Drehkammerfilter-Filtrationsvorrichtung 1d mit einem Filterrotor 3d, von welchem der Filtertuch-Stützkörper 2 gebildet ist und welcher eine Filterrotorlängsachse 5d definiert, die mit der Stützkörper-Drehachse 4 zusammenfällt, und welcher eine Filterrotorumfangswand 7d aufweist, die sich rings um die Filterrotorlängsachse 5d herum erstreckt und die eine Umfangswandaußenseite 9d hat, welche durch vorspringende Elemente 300, die von der Umfangswandaußenseite 9 aus radial nach außen hin vorspringen, unterteilt ist, so dass an der Umfangswandaußenseite 9d eine Mehrzahl von Umfangswandaußenseite-Segmenten 301 gebildet sind, welche durch die vorspringenden Elemente 300 voneinander getrennt sind und von welchen die Filtertuch-Anbringfläche 6 ausgebildet ist. In jedem Umfangswandaußenseite-Segment 301 ist ein Filtertuchteil 11a einer Mehrzahl von Filtertuchteilen 11a vorgesehen, wobei die Mehrzahl von Filtertuchteilen 11a das Filtertuch 11 bilden. Die Drehkammerfilter-Filtrationsvorrichtung 1d ist ferner bereitgestellt mit: einer mit dem zuvor genannten Filterrotor 3d verbundenen Antriebswelle 100d, die sich koaxial zur Filterrotorlängsachse 5d erstreckt und mittels der der Filterrotor 3d drehantreibbar ist, und einem Antriebsmotor M, der mit der Antriebswelle wirkverbunden ist, so dass ein von dem Antriebsmotor M ausgehendes Drehmoment mittels der Antriebswelle 100d auf den Filterrotor 3d übertragbar ist (z.B., in Betrieb, übertragen wird). Die Drehkammerfilter-Filtrationsvorrichtung 1d ist ferner bereitgestellt mit einem Drehkammerfiltergehäuse 303, das konfiguriert ist, um den Filterrotor 3d im Wesentlichen zu umgeben, wobei der Filterrotor 3d innerhalb dieses Drehkammerfiltergehäuses rotierbar ist. Das Drehkammerfiltergehäuse 303 kann ferner aufweisen wenigstens eine Feststoff-Austrag-Öffnung 305 und wenigstens eine Zuführ-Öffnung 307 (z.B. zum Zuführen einer zu filtrierenden Suspension). Ferner kann der der Filterrotor 3d eine Mehrzahl von Flüssigkeit-Austrag-Kanälen 309 aufweisen. Exemplarisch ist bei der Ausführungsform der Fig. 12 ähnlich wie bei den jeweiligen Ausführungsformen der Fign. 1, 2A, 10 und 11 das jeweilige magnetische oder magnetisierbare Gegenelement 19 als ein (z.B. langgestrecktes) Klemmleistenbauteil 29 (z.B. eine Klemmleiste) ausgebildet, mittels dessen ein jeweiliges Filtertuchteil 11a, welches in einer der Umfangswandaußenseite-Segmente 301 angeordnet ist, von der Filtertuchteil-Außenseite (bzw. der Filtertuch-Außenseite) her gegen die Umfangswandaußenseite 9d des Filterrotors 3d (via Magnetkraft) geklemmt ist, so dass das Filtertuchteil 11a dadurch an der Umfangswandaußenseite 9d (via Magnetkraft) klemmend befestigt ist.

### Bezugszeichenliste

- 1: Filtrationsvorrichtung
- 1a: Vakuum- und/oder Druck-Filtrationsvorrichtung
- 1b: Filterzentrifuge-Filtrationsvorrichtung
- 1c: Scheibenfilter-Filtrationsvorrichtung
- 1d: Drehkammerfilter-Filtrationsvorrichtung
- 2: Filtertuch-Stützkörper
- 3: Filtertrommel (der Vakuum- und/oder Druck-Filtrationsvorrichtung)
- 3b: Filtertrommel (der Filterzentrifuge-Filtrationsvorrichtung)
- 3c: Scheibenkörper
- 3d: Filterrotor
- 4: Stützkörper-Drehachse
- 5: Filtertrommellängsachse (der Vakuum- und/oder Druck-Filtrationsvorrichtung)
- 5b: Filtertrommellängsachse (der Filterzentrifuge-Filtrationsvorrichtung)
- 5c: Scheibenkörper-Zentralachse
- 5d: Filterrotorlängsachse
- 6: Filtertuch-Anbringfläche
- 7: Filtertrommelumfangswand (der Vakuum- und/oder Druck-Filtrationsvorrichtung)
- 7b: Filtertrommelumfangswand (der Filterzentrifuge-Filtrationsvorrichtung)
- 7d: Filterrotorumfangswand
- 9: Umfangswandaußenseite (der Vakuum- und/oder Druck-Filtrationsvorrichtung)
- 9b: Umfangswandinnenseite (der Filterzentrifuge-Filtrationsvorrichtung)
- 9c: Scheibenkörperfläche
- 9d: Umfangswandaußenseite (der Drehkammerfilter-Filtrationsvorrichtung)
- 11: Filtertuch
- 11a: Filtertuchteil
- 13: Befestigungseinrichtung
- 15: Magnetbefestigungseinrichtung
- 17: magnetische Elemente
- 18: Magnetisches-Element-Halter
- 19: magnetische oder magnetisierbare Gegenelemente
- 21: Trennleiste
- 23: Filterzelle
- 25: Ringleiste
- 27: Tasche
- 29: Klemmleistenbauteil
- 31: Trennleiste-Nut
- 33: Ringleiste-Nut
- 35: Klemmbefestigungseinrichtung
- 37: Eingriff-Stücken
- 39: Halte-Nut
- 41: Filterzelleneinlage
- 43: Führungselement
- 100: Antriebswelle (der Vakuum- und/oder Druck-Filtrationsvorrichtung)
- 100b: Antriebswelle (der Filterzentrifuge-Filtrationsvorrichtung)
- 100c: Antriebswelle (der Scheibenfilter-Filtrationsvorrichtung)
- 100d: Antriebswelle (der Drehkammerfilter-Filtrationsvorrichtung)
- 110: Wanne (der Vakuum- und/oder Druck-Filtrationsvorrichtung)
- 110c: Wanne (der Scheibenfilter-Filtrationsvorrichtung)
- 200: Zentrifugengehäuse
- 210: Flüssigkeit-Austrag-Öffnung(der Filterzentrifuge-Filtrationsvorrichtung)
- 212: Feststoff-Austrag-Öffnung (der Filterzentrifuge-Filtrationsvorrichtung)
- 214: Zuführ-Öffnung (der Filterzentrifuge-Filtrationsvorrichtung)
- 300: vorspringendes Element
- 301: Umfangswandaußenseite-Segment
- 303: Drehkammerfiltergehäuse
- 305: Feststoff-Austrag-Öffnung (der Drehkammerfilter-Filtrationsvorrichtung)
- 307: Zuführ-Öffnung (der Drehkammerfilter-Filtrationsvorrichtung)
- 309: Flüssigkeit-Austrag-Kanäle
- M: Antriebsvorrichtung

## Patentansprüche

1. Filtrationsvorrichtung (1) mit:
einem Filtertuch (11),
einem Filtertuch-Stützkörper (2), welcher um eine Stützkörper-Drehachse (4) herum drehbar gelagert ist und welcher eine Filtertuch-Anbringfläche (6) aufweist, auf welcher das Filtertuch (11) anbringbar ist, und
einer Befestigungseinrichtung (13), mittels deren das Filtertuch (11) an der Filtertuch-Anbringfläche (6) lösbar befestigbar ist,
wobei die Befestigungseinrichtung (13) eine Magnetbefestigungseinrichtung (15) aufweist, mittels deren das Filtertuch (11) via magnetische Kraft an der Filtertuch-Anbringfläche (6) befestigbar ist,
wobei die Filtrationsvorrichtung (1) ausgebildet ist als eine Vakuum- und/oder Druck-Filtrationsvorrichtung (1a) mit einer Filtertrommel (3), von welcher der Filtertuch-Stützkörper (2) gebildet ist und welche eine Filtertrommellängsachse (5) definiert, die mit der Stützkörper-Drehachse (4) zusammenfällt, und welche eine Filtertrommelumfangswand (7) aufweist, die sich rings um die Filtertrommellängsachse (5) herum erstreckt und die eine Umfangswandaußenseite (9) hat, von welcher die Filtertuch-Anbringfläche (6) ausgebildet ist;
**dadurch gekennzeichnet, dass**
die Filtertrommel (3) eine Mehrzahl von Trennleisten (21) aufweist, welche in Umfangsrichtung der Filtertrommel (3) im Abstand voneinander angeordnet sind und welche sich an der Filtertrommelumfangswand (7) entlang der Filtertrommellängsachse (5) erstrecken, um dadurch in Umfangsrichtung der Filtertrommel (3) eine korrespondierende Mehrzahl von Filterzellen (23) zwischen sich zu begrenzen, wobei zumindest ein Teil der magnetischen Elemente (17) oder das jeweilige magnetische Element (17) in der Mehrzahl von Trennleisten (21) aufgenommen ist.

2. Filtrationsvorrichtung (1) gemäß Anspruch 1, wobei die Magnetbefestigungseinrichtung (15) aufweist:
ein oder mehrere magnetische Elemente (17), welche/s an dem Filtertuch-Stützkörper (2) angeordnet sind/ist und/oder welche/s von dem Filtertuch-Stützkörper (2) ausgebildet sind/ist, und
ein oder mehrere magnetische oder magnetisierbare Gegenelemente (19), welche/s an dem Filtertuch (11) angeordnet sind/ist und/oder welche/s von dem Filtertuch (11) ausgebildet sind/ist,
wobei die magnetische Kraft zwischen dem/den magnetischen Element/en (17) und dem/den magnetischen oder magnetisierbaren Gegenelement/en (19) wirkt.

3. Filtrationsvorrichtung (1) gemäß Anspruch 2, wobei das jeweilige magnetische Element (17) von einem Permanentmagnet oder einem Elektromagnet gebildet ist, und/oder wobei das jeweilige magnetische oder magnetisierbare Gegenelement (19) aus einem ferromagnetischen und/oder einem Duplex-Material hergestellt ist.

4. Filtrationsvorrichtung (1) gemäß Anspruch 2 oder 3, wobei der Filtertuch-Stützkörper (2) im Bereich der Filtertuch-Anbringfläche (6) zumindest teilweise aus einem magnetischen Material hergestellt ist, und wobei das Filtertuch (11) zumindest teilweise aus einem magnetischen Material, das zu dem magnetischen Material des Filtertuch-Stützkörpers (2) im Bereich der Filtertuch-Anbringfläche (6) gegenpolig ist, oder zumindest teilweise aus einem magnetisierbaren Material hergestellt ist, so dass das magnetische Element (17) von dem Filtertuch-Stützkörper (2) ausgebildet wird und dass das magnetische oder magnetisierbare Gegenelement (19) von dem Filtertuch (11) ausgebildet wird.

5. Filtrationsvorrichtung (1) gemäß einem der Ansprüche 2 bis 4, wobei zumindest ein Teil der magnetischen oder magnetisierbaren Gegenelemente (19) jeweilig oder das jeweilige magnetische oder magnetisierbare Gegenelement (19) als ein von dem Filtertuch (11) separates Bauteil ausgebildet ist/sind, das in das Filtertuch (11) eingebracht ist und/oder an dem Filtertuch (11) befestigt ist.

6. Filtrationsvorrichtung (1) gemäß Anspruch 5,
wobei zumindest ein Teil der magnetischen oder magnetisierbaren Gegenelemente (19) oder das jeweilige magnetische oder magnetisierbare Gegenelement (19) in das Filtertuch (11) laminiert ist und/oder in Taschen (27) aufgenommen ist, die in dem Filtertuch (11) ausgebildet sind, und/oder
wobei zumindest ein Teil der magnetischen oder magnetisierbaren Gegenelemente (19) oder das jeweilige magnetische oder magnetisierbare Gegenelement (19) in oder an das Filtertuch (11) ein- oder angenäht oder ein- oder angeklebt ist.

7. Filtrationsvorrichtung (1) gemäß einem der Ansprüche 2 bis 4, wobei zumindest ein Teil der magnetischen oder magnetisierbaren Gegenelemente (19) jeweilig oder das jeweilige magnetische oder magnetisierbare Gegenelement (19) als ein zusammen mit dem Filtertuch (11) integral hergestelltes Element ausgebildet ist, wobei, optional, zumindest ein Teil der magnetischen oder magnetisierbaren Gegenelemente (19) oder das jeweilige magnetische oder magnetisierbare Gegenelement (19) von magnetischen oder magnetisierbaren Fäden gebildet ist/sind, aus welchen das Filtertuch (11) zumindest teilweise gebildet ist.

8. Filtrationsvorrichtung (1) gemäß einem der Ansprüche 2 bis 4, wobei zumindest ein Teil der magnetischen oder magnetisierbaren Gegenelemente (19) jeweilig oder das jeweilige magnetische oder magnetisierbare Gegenelement (19) als ein von dem Filtertuch (11) separates Klemmleistenbauteil (29) ausgebildet ist, mittels dessen das Filtertuch (11) von einer Filtertuch-Außenseite her gegen die Filtertuch-Anbringfläche (6) klemmbar ist, um das Filtertuch (11) dadurch an der Filtertuch-Anbringfläche (6) klemmend zu befestigen.

9. Filtrationsvorrichtung (1) gemäß irgendeinem der vorherigen Ansprüche, wobei zumindest ein Teil der magnetischen oder magnetisierbaren Gegenelemente (19) oder das jeweilige magnetische oder magnetisierbare Gegenelemente (19) aus einem nicht-magnetischen, gegenüber einer zu filtrierenden Suspension korrosionsbeständigen Material ist.

10. Filtrationsvorrichtung (1) gemäß irgendeinem der vorherigen Ansprüche, wobei das jeweilige magnetische Element (17) in dem Filtertuch-Stützkörper (2) derart eingebettet ist, dass es nach außen hin gegen einen Berührungskontakt mit einer zu filtrierenden Suspension isoliert angeordnet ist.

11. Filtrationsvorrichtung (1) gemäß irgendeinem der Ansprüche 1 bis 10, wobei in der jeweiligen Trennleiste (21) eine radial nach außen offene Trennleiste-Nut (31) ausgebildet ist, und wobei, optional, im Befestigungszustand, in welchem das Filtertuch (11) an der Umfangswandaußenseite (9) befestigt ist, das Filtertuch (11) in die Trennleiste-Nut (31) eingreift und von dem magnetischen oder magnetisierbaren Gegenelement (19) in diesem Eingriff mit der Trennleiste-Nut (31) gehalten wird, wobei ferner optional das magnetische oder magnetisierbare Gegenelement (19) seinerseits zumindest teilweise in die Trennleiste-Nut (31) eingreift.

12. Filtrationsvorrichtung (1) gemäß irgendeinem der Ansprüche 1 bis 11 , wobei die Filtertrommel (3) eine Mehrzahl von Ringleisten (25) aufweist, welche in Längsrichtung der Filtertrommel (3) im Abstand voneinander angeordnet sind und welche sich an der Filtertrommelumfangswand (7) in Umfangsrichtung der Filtertrommel (3) erstrecken, wobei ein Teil der magnetischen Elemente (17) in der Mehrzahl von Ringleisten (25) aufgenommen ist, wobei, optional, in der jeweiligen Ringleiste (25) eine radial nach außen offene Ringleiste-Nut (33) ausgebildet ist, und wobei, ferner optional, im Befestigungszustand, in welchem das Filtertuch (11) an der Umfangswandaußenseite (9) befestigt ist, das Filtertuch (11) in die Ringleiste-Nut (33) eingreift und von dem magnetischen oder magnetisierbaren Gegenelement (19) in diesem Eingriff mit der Ringleiste-Nut (33) gehalten wird, wobei ferner optional das magnetische oder magnetisierbare Gegenelement (19) seinerseits zumindest teilweise in die Ringleiste-Nut (33) eingreift.

13. Filtrationsvorrichtung (1) gemäß irgendeinem der Ansprüche 1 bis 12, ferner mit einer Drahtwicklung, die sich an der Außenseite des an der Filtertrommel (3) befestigten Filtertuchs (11) rings um die Filtertrommellängsachse (5) herum erstreckt, so dass sich das Filtertuch (11) zwischen der Drahtwicklung und der Umfangswandaußenseite (9) der Filtertrommel (3) befindet.

14. Filtrationsvorrichtung (1) gemäß irgendeinem der Ansprüche 1 bis 13, wobei die Befestigungseinrichtung (13) ferner eine Klemmbefestigungseinrichtung (35) aufweist, welche eine Mehrzahl von Eingriff-Stücken (37) aufweist, und wobei die Filtertrommel (3) eine Mehrzahl von Ringleisten (25) aufweist, welche in Längsrichtung der Filtertrommel (3) im Abstand voneinander angeordnet sind und welche sich an der Filtertrommelumfangswand (7) in Umfangsrichtung der Filtertrommel (3) erstrecken, wobei in den jeweiligen Ringleisten (25) eine radial nach außen offene Halte-Nut (39) umfänglich gebildet ist, wobei das Filtertuch (11) jeweils in Umfangsrichtung der Filtertrommel (3) darin festklemmbar ist mittels des jeweiligen Eingriff-Stücks (37).

## Claims

1. Filtration device (1), comprising:
a filter cloth (11),
a filter cloth support body (2) rotatably mounted about a support body rotation axis (4) and comprising a filter cloth attachment surface (6) to which the filter cloth (11) is attachable, and
a fastening device (13) by means of which the filter cloth (11) can be detachably fastened to the filter cloth attachment surface (6),
wherein the fastening device (13) comprises a magnet fastening device (15), by means of which the filter cloth (11) can be fastened to the filter cloth attachment surface (6) via magnetic force,
wherein the filtration device (1) is configured as a vacuum and/or pressure filtration device (1a) having a filter drum (3), by which the filter cloth support body (2) is formed and which defines a filter drum longitudinal axis (5), which coincides with the support body rotation axis (4), and which comprises a filter drum circumferential wall (7) which extends around the filter drum longitudinal axis (5) and which has a circumferential wall outer side (9) by which the filter cloth attachment surface (6) is formed,
**characterized in that**
the filter drum (3) comprises a plurality of separation bars (21) which are spaced apart from each other in the circumferential direction of the filter drum (3) and which extend on the filter drum circumferential wall (7) along the filter drum longitudinal axis (5) to thereby limit a corresponding plurality of filter cells (23) therebetween in the circumferential direction of the filter drum (3), wherein at least a part of the magnetic elements (17) or the respective magnetic element (17) is accommodated in the plurality of separation bars (21).

2. Filtration device (1) according to claim 1, wherein the magnet fastening device (15) comprises:
one or more magnetic elements (17) which is/are arranged on the filter cloth support body (2) and/or which is/are formed by the filter cloth support body (2); and
one or more magnetic or magnetizable counter elements (19) arranged on the filter cloth (11) and/or formed by the filter cloth (11),
wherein the magnetic force acts between the magnetic element(s) (17) and the magnetic or magnetizable counter element(s) (19).

3. Filtration device (1) according to claim 2, wherein the respective magnetic element (17) is formed by a permanent magnet or an electromagnet, and/or wherein the respective magnetic or magnetizable counter element (19) is made of a ferromagnetic and/or a duplex material.

4. Filtration device (1) according to claim 2 or 3, wherein the filter cloth support body (2) in the region of the filter cloth attachment surface (6) is at least partially made of a magnetic material, and wherein the filter cloth (11) is at least partially made of a magnetic material, which is of opposite polarity to the magnetic material of the filter cloth support body (2) in the region of the filter cloth attachment surface (6), or is at least partially made of a magnetizable material, so that the magnetic element (17) is formed by the filter cloth support body (2) and that the magnetic or magnetizable counter element (19) is formed by the filter cloth (11).

5. Filtration device (1) according to any one of claims 2 to 4, wherein at least a part of the magnetic or magnetizable counter elements (19) respectively or the respective magnetic or magnetizable counter element (19) is/are formed as a component separate from the filter cloth (11), which is introduced into the filter cloth (11) and/or is attached to the filter cloth (11).

6. Filtration device (1) according to claim 5,
wherein at least a part of the magnetic or magnetizable counter elements (19) or the respective magnetic or magnetizable counter element (19) is laminated into the filter cloth (11) and/or is accommodated in pockets (27) formed in the filter cloth (11), and/or
wherein at least a part of the magnetic or magnetizable counter elements (19) or the respective magnetic or magnetizable counter element (19) is sewn or glued into or onto the filter cloth (11).

7. Filtration device (1) according to any one of claims 2 to 4, wherein at least part of the magnetic or magnetizable counter elements (19) respectively or the respective magnetic or magnetizable counter element (19) is formed as an element integrally manufactured together with the filter cloth (11), wherein, optionally, at least part of the magnetic or magnetizable counter elements (19) or the respective magnetic or magnetizable counter element (19) is/are formed by magnetic or magnetizable threads by which the filter cloth (11) is at least partially formed.

8. Filtration device (1) according to any one of claims 2 to 4, wherein at least part of the magnetic or magnetizable counter elements (19) respectively or the respective magnetic or magnetizable counter element (19) is formed as a clamping bar component (29) separate from the filter cloth (11), by means of which the filter cloth (11) can be clamped from a filter cloth outer side against the filter cloth attachment surface (6) in order to thereby attach the filter cloth (11) to the filter cloth attachment surface (6) in a clamping way.

9. Filtration device (1) according to any one of the preceding claims, wherein at least a part of the magnetic or magnetizable counter elements (19) or the respective magnetic or magnetizable counter element (19) is made of a nonmagnetic material that is corrosion-resistant to a suspension to be filtered.

10. Filtration device (1) according to any one of the preceding claims, wherein the respective magnetic element (17) is embedded in the filter cloth support body (2) in such a way that it is arranged isolated toward the outside against touch contact with a suspension to be filtered.

11. Filtration device (1) according to any one of claims 1 to 10, wherein a radially outwardly open separation bar groove (31) is formed in the respective separation bar (21), and wherein, optionally, in the fastening state in which the filter cloth (11) is fastened to the circumferential wall outer side (9), the filter cloth (11) engages in the separation bar groove (31) and is held in this engagement with the separation bar groove (31) by the magnetic or magnetizable counter element (19), wherein further optionally the magnetic or magnetizable counter element (19) in turn engages at least partially in the separation bar groove (31).

12. Filtration device (1) according to any one of claims 1 to 11, wherein the filter drum (3) comprises a plurality of ring strips (25) which are spaced apart from each other in the longitudinal direction of the filter drum (3) and which extend on the filter drum circumferential wall (7) in the circumferential direction of the filter drum (3), wherein a part of the magnetic elements (17) is received in the plurality of ring strips (25), wherein, optionally, a radially outwardly open ring strip groove (33) is formed in the respective ring strip (25), and wherein, further optionally, in the fastening state in which the filter cloth (11) is fastened to the circumferential wall outer side (9), the filter cloth (11) engages in the ring strip groove (33) and is held by the magnetic or magnetizable counter element (19) in this engagement with the ring strip groove (33), wherein further optionally the magnetic or magnetizable counter element (19) in turn engages at least partially in the ring strip groove (33).

13. Filtration device (1) according to any one of claims 1 to 12, further comprising a wire coil extending around the filter drum longitudinal axis (5) on the outside of the filter cloth (11) attached to the filter drum (3), so that the filter cloth (11) is located between the wire coil and the circumferential wall outer side (9) of the filter drum (3) .

14. Filtration device (1) according to any one of claims 1 to 13, wherein the fastening device (13) further comprises a clamp fastening device (35) comprising a plurality of engagement pieces (37), and wherein the filter drum (3) comprises a plurality of ring strips (25) which are spaced apart from each other in the longitudinal direction of the filter drum (3), and which extend on the filter drum circumferential wall (7) in the circumferential direction of the filter drum (3), wherein a holding groove (39) open radially outwardly is formed circumferentially in the respective ring strips (25), wherein the filter cloth (11) can respectively be clamped therein in the circumferential direction of the filter drum (3) by means of the respective engagement piece (37).

## Revendications

1. Dispositif de filtration (1) avec :
une toile filtrante (11),
un corps de support de toile filtrante (2), lequel est monté de manière à pouvoir tourner autour d'un axe de rotation de corps de support (4) et lequel présente une surface d'application de toile filtrante (6), sur laquelle la toile filtrante (11) peut être appliquée, et
un système de fixation (13), au moyen duquel la toile filtrante (11) peut être fixée de manière détachable sur la surface d'application de toile filtrante (6),
dans lequel le système de fixation (13) présente un système de fixation magnétique (15), au moyen duquel la toile filtrante (11) peut être fixée sur la surface d'application de toile filtrante (6) par le biais d'une force magnétique,
dans lequel le dispositif de filtration (1) est réalisé sous la forme d'un dispositif de filtration à vide et/ou pression (1a) avec un tambour filtrant (3), par lequel le corps de support de toile filtrante (2) est formé et lequel définit un axe longitudinal de tambour filtrant (5), qui coïncide avec l'axe de rotation de corps de support (4), et lequel présente une paroi périphérique de tambour filtrant (7), qui s'étend tout autour de l'axe longitudinal de tambour filtrant (5) et qui possède une face extérieure de paroi périphérique (9), par laquelle la surface d'application de toile filtrante (6) est réalisée ;
**caractérisé en ce que**
le tambour filtrant (3) présente une pluralité de baguettes de séparation (21), lesquelles sont disposées à distance les unes des autres dans la direction périphérique du tambour filtrant (3) et lesquelles s'étendent sur la paroi périphérique de tambour filtrant (7) le long de l'axe longitudinal de tambour filtrant (5), afin de délimiter de cette manière entre elles dans la direction périphérique du tambour filtrant (3) une pluralité correspondante de cellules filtrantes (23), dans lequel au moins une partie des éléments magnétiques (17) ou l'élément magnétique (17) respectif est reçu(e) dans la pluralité de baguettes de séparation (21).

2. Dispositif de filtration (1) selon la revendication 1,
dans lequel le système de fixation magnétique (15) présente :
un ou plusieurs éléments magnétiques (17), lequel/lesquels est/sont disposé(s) sur le corps de support de toile filtrante (2) et/ou lequel/lesquels est/sont réalisé(s) par le corps de support de toile filtrante (2), et
un ou plusieurs éléments complémentaires magnétiques ou magnétisables (19), lequel/lesquels est/sont disposé(s) sur la toile filtrante (11) et/ou lequel/lesquels est/sont réalisé(s) par la toile filtrante (11),
dans lequel la force magnétique agit entre le/les élément(s) magnétique(s) (17) et le/les élément(s) complémentaire(s) magnétique(s) ou magnétisable(s) (19).

3. Dispositif de filtration (1) selon la revendication 2, dans lequel l'élément magnétique (17) respectif est formé par un aimant permanent ou un électroaimant, et/ou dans lequel l'élément complémentaire magnétique ou magnétisable (19) respectif est fabriqué à partir d'un matériau ferromagnétique et/ou duplex.

4. Dispositif de filtration (1) selon la revendication 2 ou 3, dans lequel le corps de support de toile filtrante (2) dans la zone de la surface d'application de toile filtrante (6) est fabriqué au moins en partie à partir d'un matériau magnétique, et dans lequel la toile filtrante (11) est fabriquée au moins en partie à partir d'un matériau magnétique, qui est à polarité opposée par rapport au matériau magnétique du corps de support de toile filtrante (2) dans la zone de la surface d'application de toile filtrante (6), ou au moins en partie à partir d'un matériau magnétisable, de sorte que l'élément magnétique (17) est réalisé par le corps de support de toile filtrante (2) et que l'élément complémentaire magnétique ou magnétisable (19) est réalisé par la toile filtrante (11).

5. Dispositif de filtration (1) selon l'une des revendications 2 à 4, dans lequel au moins une partie des éléments complémentaires magnétiques ou magnétisables (19) ou l'élément complémentaire magnétique ou magnétisable (19) respectif est/sont réalisé(s) sous la forme d'un composant séparé de la toile filtrante (11), qui est introduit dans la toile filtrante (11) et/ou est fixé sur la toile filtrante (11).

6. Dispositif de filtration (1) selon la revendication 5,
dans lequel au moins une partie des éléments complémentaires magnétiques ou magnétisables (19) ou l'élément complémentaire magnétique ou magnétisable (19) respectif est stratifié(e) dans la toile filtrante (11) et/ou est reçu(e) dans des poches (27), qui sont réalisées dans la toile filtrante (11), et/ou dans lequel au moins une partie des éléments complémentaires magnétiques ou magnétisables (19) ou l'élément complémentaire magnétique ou magnétisable (19) respectif est cousu(e) ou collé(e) dans ou sur la toile filtrante (11).

7. Dispositif de filtration (1) selon l'une des revendications 2 à 4, dans lequel au moins une partie des éléments complémentaires magnétiques ou magnétisables (19) ou l'élément complémentaire magnétique ou magnétisable (19) respectif est réalisé(e) sous la forme d'un élément fabriqué d'un seul tenant conjointement avec la toile filtrante (11), dans lequel, éventuellement, au moins une partie des éléments complémentaires magnétiques ou magnétisables (19) ou l'élément complémentaire magnétique ou magnétisable (19) respectif est/sont formé(s) par des fils magnétiques ou magnétisables, dont la toile filtrante (11) est formée au moins en partie.

8. Dispositif de filtration (1) selon l'une des revendications 2 à 4, dans lequel au moins une partie des éléments complémentaires magnétiques ou magnétisables (19) ou l'élément complémentaire magnétique ou magnétisable (19) respectif est réalisé(e) sous la forme d'un composant de baguette de serrage (29) séparé de la toile filtrante (11), au moyen duquel la toile filtrante (11) peut être serrée à partir d'une face extérieure de toile filtrante contre la surface d'application de toile filtrante (6), afin de fixer de cette manière la toile filtrante (11) par serrage sur la surface d'application de toile filtrante (6).

9. Dispositif de filtration (1) selon l'une quelconque des revendications précédentes, dans lequel au moins une partie des éléments complémentaires magnétiques ou magnétisables (19) ou l'élément complémentaire magnétique ou magnétisable (19) respectif est composé(e) d'un matériau non magnétique, résistant à la corrosion vis-à-vis d'une suspension à filtrer.

10. Dispositif de filtration (1) selon l'une quelconque des revendications précédentes, dans lequel l'élément magnétique (17) respectif est intégré dans le corps de support de toile filtrante (2), de telle sorte qu'il est disposé de manière isolé de l'extérieur contre un contact avec une suspension à filtrer.

11. Dispositif de filtration (1) selon l'une quelconque des revendications 1 à 10, dans lequel une rainure de baguette de séparation (31) ouverte radialement vers l'extérieur est réalisée dans la baguette de séparation (21) respective, et dans lequel, éventuellement, dans l'état de fixation dans lequel la toile filtrante (11) est fixée sur la face extérieure de paroi périphérique (9), la toile filtrante (11) s'engage dans la rainure de baguette de séparation (31) et est maintenue dans cet engagement avec la rainure de baguette de séparation (31) par l'élément complémentaire magnétique ou magnétisable (19), dans lequel l'élément complémentaire magnétique ou magnétisable (19) s'engage en outre éventuellement de son côté au moins en partie dans la rainure de baguette de séparation (31) .

12. Dispositif de filtration (1) selon l'une quelconque des revendications 1 à 11, dans lequel le tambour filtrant (3) présente une pluralité de baguettes annulaires (25), lesquelles sont disposées à distance les unes des autres dans la direction longitudinale du tambour filtrant (3) et lesquelles s'étendent sur la paroi périphérique de tambour filtrant (7) dans la direction périphérique du tambour filtrant (3), dans lequel une partie des éléments magnétiques (17) est reçue dans la pluralité de baguettes annulaires (25), dans lequel, éventuellement, dans la baguette annulaire (25) respective, une rainure de baguette annulaire (33) ouverte radialement vers l'extérieur est réalisée, et dans lequel, en outre éventuellement, dans l'état de fixation dans lequel la toile filtrante (11) est fixée sur la face extérieure de paroi périphérique (9), la toile filtrante (11) s'engage dans la rainure de baguette annulaire (33) et est retenue dans cet engagement avec la rainure de baguette annulaire (33) par l'élément complémentaire magnétique ou magnétisable (19), dans lequel en outre éventuellement l'élément complémentaire magnétique ou magnétisable (19) s'engage de son côté au moins en partie dans la rainure de baguette annulaire (33).

13. Dispositif de filtration (1) selon l'une quelconque des revendications 1 à 12, comprenant en outre un enroulement de fil, qui s'étend sur la face extérieure de la toile filtrante (11) fixée sur le tambour filtrant (3) tout autour de l'axe longitudinal de tambour filtrant (5), de sorte que la toile filtrante (11) se trouve entre l'enroulement de fil et la face extérieure de paroi périphérique (9) du tambour filtrant (3).

14. Dispositif de filtration (1) selon l'une quelconque des revendications 1 à 13, dans lequel le système de fixation (13) présente en outre un système de fixation par serrage (35), lequel présente une pluralité de pièces d'engagement (37), et dans lequel le tambour filtrant (3) présente une pluralité de baguettes annulaires (25), lesquelles sont disposées à distance les unes des autres dans la direction longitudinale du tambour filtrant (3) et lesquelles s'étendent sur la paroi périphérique de tambour filtrant (7) dans la direction périphérique du tambour filtrant (3), dans lequel une rainure de retenue (39) ouverte radialement vers l'extérieur est formée de manière périphérique dans les baguettes annulaires (25) respectives, dans lequel la toile filtrante (11) peut être serrée à bloc respectivement dans la direction périphérique du tambour filtrant (3) dans celui-ci au moyen de la pièce d'engagement (37) respective.
